# EUROPEAN PATENT SPECIFICATION

(11) **EP 4 467 031 B1**
(45) Date of publication and mention of the grant of the patent: **25.02.2026**
(21) Application number: 24170706.6
(22) Date of filing: 17.04.2024
(51) Int. Cl.: A42B 3/04, F41H 1/04, H01M 50/247, H02J 7/00, H01M 50/258

(54) **BATTERY ADAPTER AND BATTERY SYSTEM FOR HELMET MOUNT ASSEMBLY**
BATTERIEADAPTER UND BATTERIESYSTEM FÜR HELMMONTAGEANORDNUNG
ADAPTATEUR DE BATTERIE ET SYSTÈME DE BATTERIE POUR ENSEMBLE DE MONTAGE DE CASQUE

(30) Priority: 24.04.2023 US 202363461538 P
(43) Date of publication of application: 27.11.2024
(73) Proprietor: Wilcox Industries Corp., Newington, NH 03801 (US)
(72) Inventor: TEETZEL, James W., Newington, NH 03801 (US); Turner, Elliott S., Newington, NH 03801 (US)
(74) Representative: FRKelly

(56) References cited:
- EP-A1- 3 714 721
- WO-A1-2022/115531
- US-A1- 2023 046 229

## Description

### RELATED APPLICATION

This application claims the priority benefit of U.S. provisional application no. 63/461,538 filed April 24, 2023.

This application is related to U.S. provisional application Serial No. 63/433,661 filed December 19, 2022; U.S. nonprovisional application no. 18/544,128 filed December 18, 2023; U.S. provisional application Serial No. 63/454,691 filed March 26, 2023, and U.S. nonprovisional application no. 18/614,070 filed March 22, 2024.

### BACKGROUND

The present disclosure relates to batteries and, in particular, to a battery attachment system for a powered helmet mount assembly.

EP 3 714 721 A1, which discloses the preamble of claim 1, discloses a helmet interface system that includes a helmet strap assembly and a helmet shroud. The shroud includes an interface assembly that mates with a first hot shoe of a helmet mount and provides a high-speed data connection when coupled. The system further includes a battery mount assembly with a second hot shoe portion, which mates with a corresponding receiver on a battery pack. Both the helmet and battery interfaces enable high-speed electrical connectivity between components when engaged.

US 2023/046229 A1, which discloses the preamble of claims 9 and 15, discloses a power system designed for attachment to a helmet. The system provides both power and data connections to helmet-mounted accessory devices. It includes a base unit attachable to the helmet, which incorporates a processor, an internal power source, and multiple cable interfaces. The system allows for the connection of accessory devices through one or more accessory interfaces. The base unit also features an interface for attaching a power module, which contains removable power sources. The base unit selectively supplies power to the accessory devices either from the internal power source or from the removable power source.

### SUMMARY

In one aspect, a battery pack system for a helmet mount assembly includes a center base module configured for electrical and physical attachment to a helmet mount assembly. First and second battery packs are configured for removable attachment to the center base module. Each of the first and second battery packs have a pair of protruding attachment lugs, wherein each of the attachment lugs has first magnetic fastener element and a first electrical connector element. The center base module has a first side surface configured for detachably securing the first battery pack. The center base module has a second side surface opposite the first side surface configured for detachably securing the second battery pack. Each of the first and second side surfaces include a pair of lug receptacles for receiving a respective one of the pairs of protruding attachment lugs. Each lug receptacle has a second magnetic fastener element for physically coupling to a respective one of the first magnetic fastener elements. Each lug receptacle has a second electrical connector element for electrically coupling to a respective one of the first electrical connector elements.

In embodiments, the center base module includes a selector switch that allows switching between the left and right battery packs without interruption to the power being supplied to the helmet mount assembly, which allows rapidly switching of the power supply when one of the battery packs is depleted and avoids the need to shut down, reboot, or otherwise power cycle an attached accessory device receiving power over the helmet mount assembly.

The magnetic fastener elements also allow a depleted battery pack to be pulled away from the center base module by manually pulling the battery pack with a force greater than the magnetic force of attraction between the magnetic fastener elements, which allows the user to easily change the batteries with the battery pack in front of the body and in plain view of the user, which task would otherwise be difficult to do blindly reaching behind the back of the helmet.

In a further aspect, a battery pack system for a helmet mount assembly includes a center base module configured for electrical and physical attachment to a helmet mount assembly. First and second battery packs are configured for removable attachment to the center base module. A first adapter is hingedly attached to a first side of the center base module and has a first interface surface configured for removable attachment to the first battery pack. A second adapter is hingedly attached to a second side of the center base module and has a second interface surface configured for removable attachment to the second battery pack.

In a further aspect, a battery pack adapter includes a first side configured for coupling to a helmet accessory control unit and a second side opposite the first side configured for detachably coupling to a battery pack. The first side includes first and second protruding attachment lugs configured to be detachably received within first and second complementary receptacles, respectively, on the helmet accessory control unit. Each of the first and second protruding attachment lugs include a magnetic fastener element configured to magnetically engage with an aligned magnetic fastener element in a respective one of the complementary receptacles. Each of the first and second protruding attachment lugs include electrical connector elements configured to establish an electrical connection with aligned electrical contacts in a respective one of the complementary receptacles.

In a more limited aspect, each of the first and second protruding attachment lugs include a slot configured to removably receive a locking plate when the battery pack adapter is attached to the helmet accessory control unit.

In another more limited aspect, the second side is configured for detachable coupling to a battery pack which conforms to a Small Tactical Universal Battery (STUB) standard for battery pack interfaces.

In another more limited aspect, a battery pack system for a helmet mount assembly includes at least one battery pack adapter and the helmet accessory control unit.

In another more limited aspect, the helmet mount assembly is a center base module configured for electrical and physical attachment to a helmet mount assembly. The battery pack system further includes a first battery pack and the at least one battery pack adapter includes a first battery pack adapter configured to be detachably coupled to a first side of the center base module wherein the first and second protruding lugs are configured for removable attachment to aligned and facing first and second sockets on the first side of the center base module.

In another more limited aspect, the battery pack system further includes a first lock bar on the center base module which is movable between a locking position and an unlocking position. The first lock bar includes a first latching plate engaging complementary grooves in the first and second protruding lugs on the first battery pack when the first adapter is attached to the center base module.

In another more limited aspect, the battery pack system further includes a second battery pack and the at least one battery pack adapter includes a second battery pack adapter configured to be detachably coupled to a second side of the center base module wherein the first and second protruding lugs are configured for removable attachment to aligned and facing first and second sockets on the second side of the center base module.

In another more limited aspect, the battery pack system further includes a second lock bar on the center base module movable between a locking position and an unlocking position. The second lock bar includes a second latching plate engaging complementary grooves in the first and second protruding lugs on the second battery pack when the second adapter is attached to center base module.

In further aspect, a battery pack system for a helmet mount assembly includes a center base module configured for electrical and physical attachment to the helmet mount assembly. First and second battery packs are removably attachable to the center base module. Each of the first and second battery packs have a pair of protruding attachment lugs, and each of the attachment lugs have first magnetic fastener element and a first electrical connector element. The center base module has a first side surface configured for detachably securing the first battery pack and a second side surface opposite the first side surface configured for detachably securing the second battery pack. Each of the first and second side surfaces include a pair of lug receptacles for receiving a respective one of the pairs of protruding attachment lugs. Each lug receptacle has a second magnetic fastener element for physically coupling to a respective one of the first magnetic fastener elements. Each lug receptacle has a second electrical connector element for electrically coupling to a respective one of the first electrical connector elements.

In another more limited aspect, the battery pack system further includes an adapter interchangeably attachable to the helmet mount assembly in place of the center base module and configured to releasably attach a third battery pack.

In another more limited aspect, the center base module includes a modular processing system removably received within a main body of the center base module.

In another more limited aspect, the center base module includes a switch configured to selectively couple a selected one of the first and second battery packs, wherein each of the first and second battery packs is replaceable independently of the other.

In another more limited aspect, the battery pack system further includes first and second adapters, the first adapter having a first interface surface configured for removable attachment to the first side surface of the center base module and a second interface surface configured for removable attachment to the first battery pack. The second adapter has a third interface surface configured for removable attachment to the second side surface of the center base module and a fourth interface surface configured for removable attachment to the second battery pack.

In another more limited aspect, the first and second battery packs are STUB battery packs.

In another aspect, a battery pack system for a helmet mount assembly includes a center base module configured for electrical and physical attachment to a helmet mount assembly. First and second battery packs are removably attachable to the center base module. A first adapter is hingedly attached to a first side of the center base module and has a first interface surface configured for removable attachment to the first battery pack. A second adapter is hingedly attached to a second side of the center base module and has a second interface surface configured for removable attachment to the second battery pack.

In more limited aspect, the first and second adapters are pivotable between a deployed position wherein the first and second battery packs are pivoted toward the helmet and a non-deployed position wherein the first and second battery packs are pivoted away the helmet to facilitate attachment and removal of the first and second battery packs.

In another more limited aspect, the first and second battery packs are STUB battery packs.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of an exemplary embodiment powered helmet mounting assembly attached to a helmet taken generally from the rear and left side, the powered helmet mounting assembly having a first embodiment battery pack center base module attached to a rear mount assembly of the powered helmet mounting assembly.
FIG. 2 is a top plan view of the helmet with the powered helmet mounting assembly and battery pack center base module appearing in FIG. 1,
FIG. 3 is an enlarged, top plan view of the battery pack center base module appearing in FIG. 1.
FIG. 4 is an enlarged, rear elevational view of the battery pack center base module appearing in FIG. 3.
FIG. 5 is an isometric view, taken generally from the rear and left side, of the exemplary embodiment powered helmet mounting assembly, helmet, and battery pack center base module appearing in FIG. 1, showing the battery pack center base module shown detached from the rear mount assembly of the powered helmet mounting assembly and further showing the manner in which the battery pack center base module can be replaced with a battery pack adapter to allow other battery packs, such as legacy battery packs, to be operably coupled to the helmet mounting system.
FIG. 6 is an isometric view of the powered helmet mounting assembly, helmet, and battery pack center base module appearing in FIG. 1, wherein left and right battery packs as removably attached to the battery pack center base module.
FIG. 7 is a top plan view of the powered helmet mounting assembly, helmet, battery pack center base module, and left and right battery packs appearing in FIG. 6.
FIG. 8 is a top plan view of the battery pack center base module with left and right battery packs appearing in FIG. 6.
FIG. 9 is a rear elevational view of the battery pack center base module with left and right battery packs appearing in FIG. 6.
FIG. 10 is a front elevational view of the battery pack center base module with left and right battery packs appearing in FIG. 6.
FIG. 11 is a fragmentary top view of the helmet with powered helmet mounting assembly, with the battery pack center base module of FIG. 1 attached to the rear mount assembly on the powered helmet mounting assembly.
FIG. 12 is an exploded top plan view of the battery pack center base module with left and right battery packs appearing in FIG. 8.
FIG. 13 is an enlarged isometric view of showing the manner of attachment of a battery pack to battery pack center base module.
FIG. 14 is an enlarged elevational view of the battery pack center base module showing the left side battery pack connector interface.
FIG. 15 is an enlarged end elevational view of a battery pack, taken from the connection interface end.
FIG. 16 an enlarged elevational view of the battery pack appearing in FIG. 15, taken generally from the side.
FIG. 17 an elevational view of a battery pack attached to the right side of the battery pack center base module, with a cutaway region showing the electrical and physical connections.
FIGS. 18 and 19 illustrate the battery pack center base module with an alternative battery pack and show the manner of attaching the battery pack to the battery pack center base module.
FIG. 20 illustrates the battery pack center base module with another alternative battery pack.
FIG. 21 illustrates the battery pack center base module with yet another alternative battery pack.
FIG. 22 is an isometric view of the battery pack center base module with left and right battery packs attached and showing the hinged rear panel in the open position for receiving a modular processing board cartridge.
FIG. 23 is an enlarged rear elevational view of the modular processing board cartridge appearing in FIG. 22.
FIG. 24 is an enlarged bottom plan view of the modular processing board cartridge appearing in FIG. 23.
FIG. 25 is an isometric view of the battery pack center base module with left and right battery packs attached and showing the hinged bottom panel in the open position for receiving programmable electronic storage media, such as non-volatile flash memory cards.
FIG. 26 is an isometric view of a further exemplary embodiment powered helmet mounting assembly attached to a helmet taken generally from the rear and left side, the powered helmet mounting assembly having the first embodiment battery pack center base module attached to a rear mount assembly of the powered helmet mounting assembly, the battery pack center base module further including left and right battery pack adapters for removably attaching battery packs in accordance with the Small Tactical Universal Battery (STUB) standard (e.g., Department of Defense MIL-PRF-32383).
FIG. 27 is a rear elevational view of the battery pack center base module and two attached STUB battery packs.
FIG. 28 is a partially exploded view of the battery pack center base module and STUB battery packs appearing in FIG. 27.
FIG. 29A is a fragmentary isometric view of an exemplary STUB battery pack useable with the present development.
FIG. 29B is a top view of an exemplary STUB battery pack useable with the present development.
FIG. 30 is a side elevational view of the STUB battery pack adapter.
FIG. 31 is a first end elevational view of the STUB battery pack adapter illustrating the connection interface for attaching the STUB battery pack.
FIG. 32 is a second end elevational view of the STUB battery pack adapter illustrating the connection interface for attaching the STUB battery pack adapter to the battery pack center base module.
FIG. 33 illustrates a second embodiment battery pack center base module with a hinged interface configured for removably attaching STUB battery packs.
FIG. 34 is a top plan view of the battery pack center base module with left and right attached STUB battery packs, showing the range of pivoting hinge movement allowing the STUB battery packs to be pivoted in relation to the battery pack center base module toward and away from the helmet.
FIG. 35 is an isometric view of the battery pack center base module with left and right STUB battery packs, illustrating the manner of attaching and detaching the STUB battery packs.
FIG. 36 is an elevational view of the hinged connector on the battery pack center base module, illustrating the connection interface of the hinged connector.
FIG. 37 is a top view of a battery pack center base module with left and right battery packs, in accordance with a third embodiment.
FIG. 38 is a front view of the battery pack center base module with left and right battery packs appearing in FIG. 37.
FIG. 39 is a rear view of the battery pack center base module with left and right battery packs appearing in FIG. 37.
FIG. 40 is a fragmentary top view of the helmet with powered helmet mounting assembly, with the battery pack center base module of FIG. 37 attached to the rear mount assembly on the powered helmet mounting assembly.
FIG. 41 illustrates two alternative methods of programming a modular processing board cartridge within the battery pack center base module.
FIG. 42 is a rear view of a battery pack center base module with left and right battery packs, in accordance with a fourth embodiment.
FIG. 43 is a top view of the battery pack center base module with left and right battery packs appearing in FIG. 42.
FIG. 44 is a bottom view of the battery pack center base module with left and right battery packs appearing in FIG. 42.
FIG. 45 is a side view of the battery pack center base module with left and right battery packs appearing in FIG. 42.
FIG. 46 is a front view of the battery pack center base module with left and right battery packs appearing in FIG. 42.
FIG. 47 is an isometric view of a battery pack center base module appearing in FIG. 42, showing interchangeability of multiple cartridge styles.
FIG. 48 is a front view of a first interchangeable cartridge embodiment.
FIG. 49 is a bottom view of the cartridge embodiment appearing in FIG. 48.
FIG. 50 is a side view of the cartridge embodiment appearing in FIG. 48.
FIG. 51 is a front view of a second interchangeable cartridge embodiment.
FIG. 52 is a bottom view of the cartridge embodiment appearing in FIG. 53.
FIG. 53 as a partially exploded view of a further embodiment battery system comprising a magnetic, locking center base module with STUB battery pack adapters.
FIG. 54 is a side view of the center base module appearing in FIG. 53, with the center base module shown in partial cut away.
FIG. 55 is a generally rear view of the center base module appearing in FIG. 53.
FIG. 56 is a side view of the STUB battery adapter appearing in FIG. 53.
FIG. 57 is a top view of the center base module appearing in FIG. 53.
FIG. 58 is a generally rear view of the center base module appearing in FIG. 53 with the center base module and STUB adapter shown in partial cut away.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope of the invention, which is solely defined by the claims. For instance, features illustrated or described as part of one embodiment may be used on another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

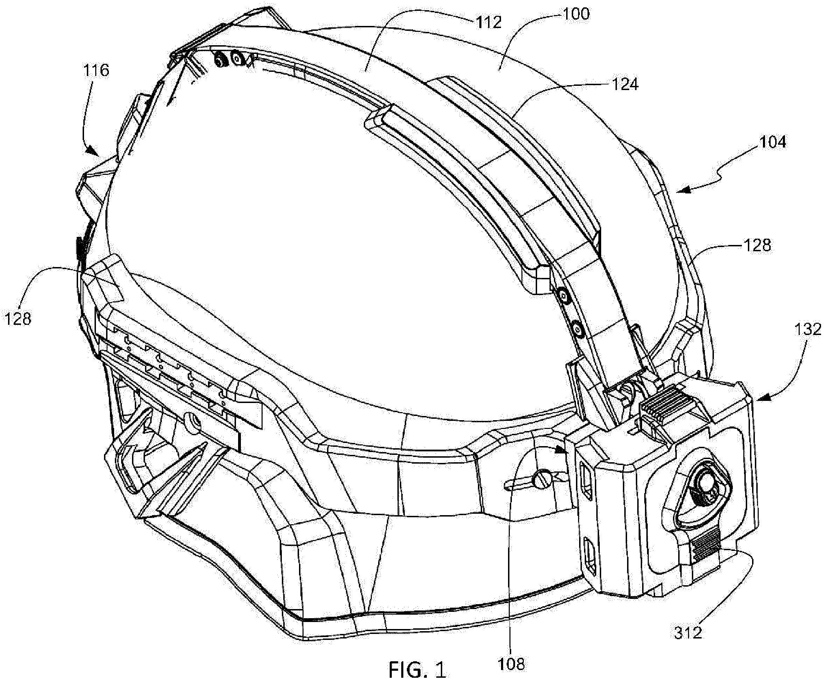

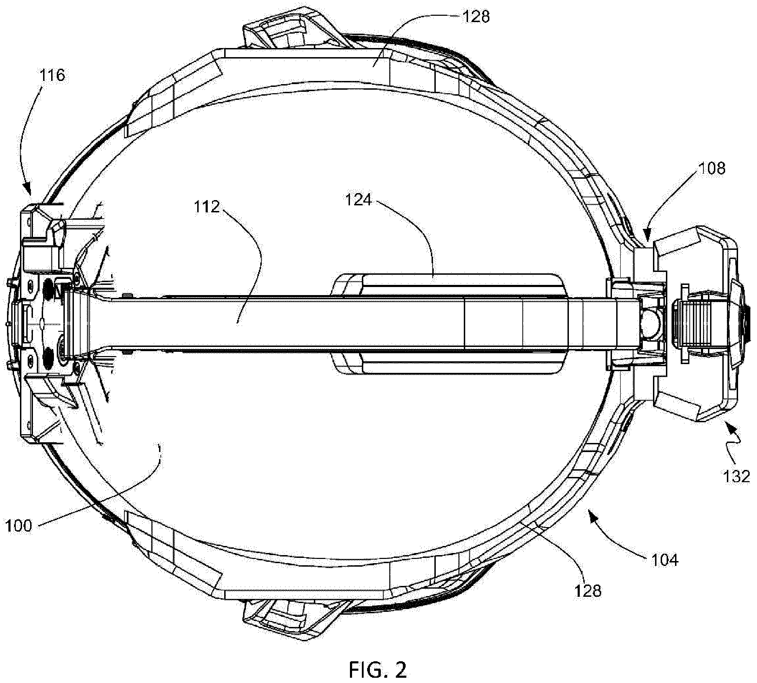

Referring now to FIGS. 1 and 2, there is shown a helmet **100** having a helmet mount assembly designated generally as reference numeral **104.** In embodiments, the helmet mount assembly may be as shown and described in commonly owned United States provisional patent application Serial No. 63/427,496 filed November 23, 2022. In the illustrated embodiment, the helmet **100** is an Integrated Head Protection System (IHPS) helmet, it will be recognized that the present development can be adapted for use with all manner of protective helmets, including a Modular Integrated Communications Helmet (MICH), Advanced Combat Helmet (ACH), Enhanced Combat Helmet (ECH), and so forth.

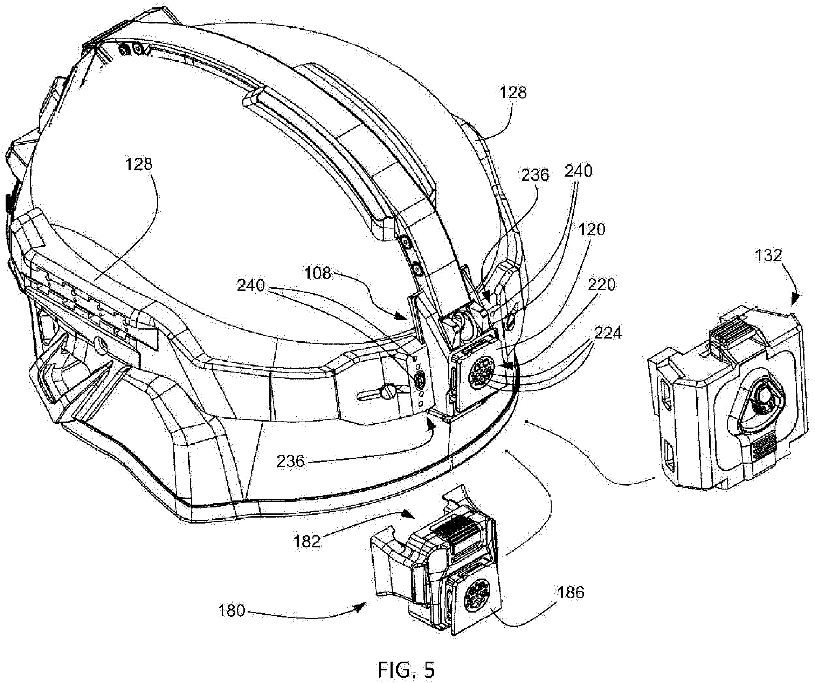

In the illustrated embodiment, the helmet mount assembly **104** includes a rear battery mounting bracket **108** disposed at the rear of the helmet **100.** A strap or cable cover **112** extends along a centerline of the helmet **100** from the rear battery mounting bracket **108** to a front shroud **116** disposed at the front of the helmet **100.** The battery mounting bracket **108** includes a hot shoe style interface **120** (see FIG. 5). The front shroud **116,** strap or cable cover **112,** and rear mounting bracket **108** may be as described in commonly-owned U.S. Patent No. 10,886,646 or commonly-owned U.S. Patent No. 11 360,309. An identification friend or for (IFF) module **124** is retained on the helmet **100** via the strap/cable cover **112.** Left and right shrouds **128** are attached to the respective left and right sides of the helmet **100** via a threaded fastener **134** engaging a clearance opening **136** in the shrouds **132** and extend between the rear battery mounting bracket **108** and the front shroud **116.** A battery pack center base module **132** is releasably attached to the rear battery mounting bracket **108**

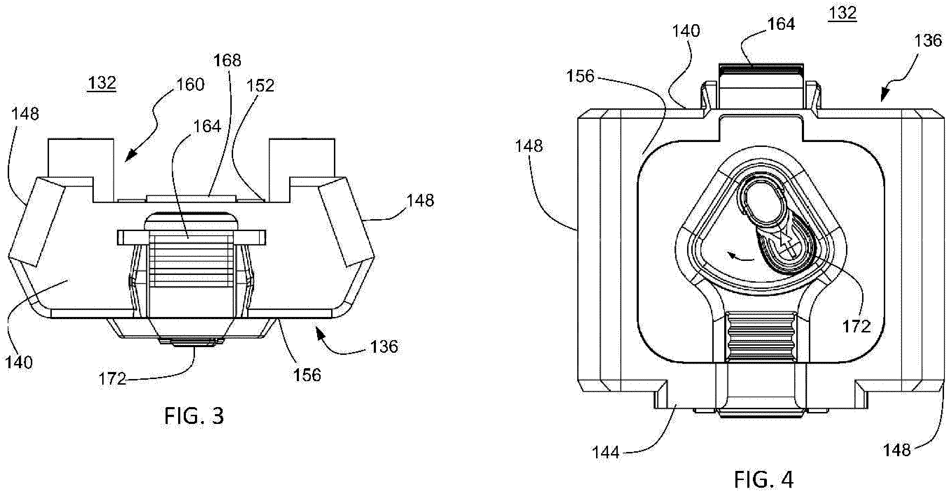

Referring now to FIGS. 3 and 4, and with continued reference to FIGS. 1 and 2, the battery pack center base module **132** includes a main body **136** having a top surface **140,** bottom surface **144,** left and right side surfaces **148,** a front or forward facing surface **152,** and a rear or rearward facing surface **156.** The front facing surface **152** includes a hot shoe receptacle **160** for detachably receiving the hot shoe mounting interface **120** on the rear battery mounting bracket **108.** As best seen in FIG. 5, in the illustrated embodiment, the hot shoe interface **120** includes a dovetail mounting member and the hot shoe receptacle **160** includes a complementary dovetail receptacle for sliding engagement. A latch release button **164** is disposed on the upper surface **140** for disengaging a latch member **168** to allow sliding removal of the battery pack center base module **132** from the rear battery mounting bracket **108.**

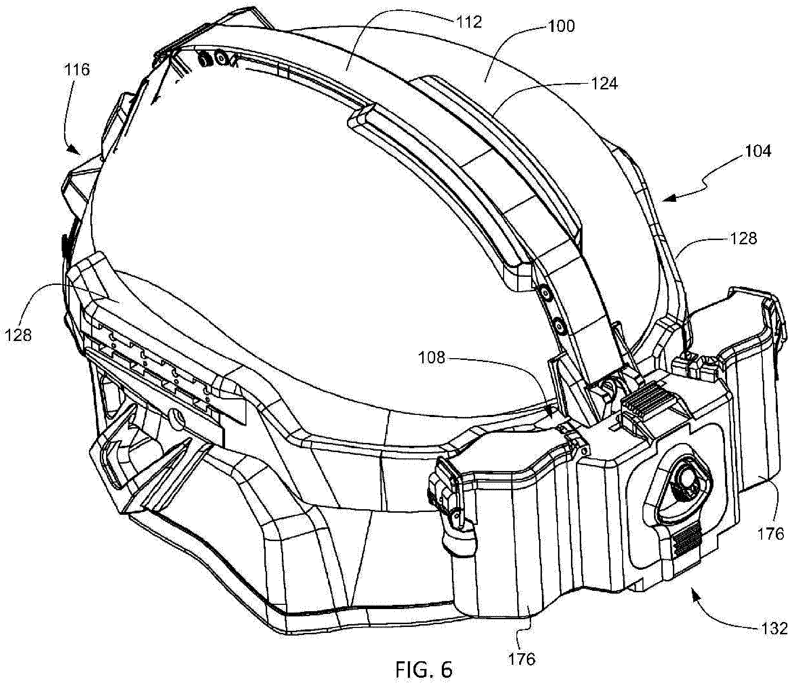

A battery selector switch **172** is pivotable between a left position and a right position. When the selector switch **172** is in the right position, the battery pack center base module **132** electrically couples a battery pack **176** (see FIG. 6) attached to the right side of the battery pack center base module **132** to the helmet mount assembly **104** via the rear battery mounting bracket **108.** When the selector switch **172** is moved the left position as indicated by the arrow appearing in FIG. 4, the battery pack center base module **132** electrically couples a battery pack **176** (see FIG. 6) attached to the right side of the battery pack center base module **132** to the helmet mount assembly **104** via the rear battery mounting bracket **108.** In operation, the user may use one of the battery packs **176** until it is depleted or nearly depleted and then use the selector switch **172** to switch the electrical connection to the other one of the battery packs **176.**

In embodiments, the selector **172** allows switching between the left and right battery packs without interruption to the power being supplied to the helmet mount assembly **104.** This is particularly advantageous when an accessory device attached to the helmet mount assembly **104** is a night vision device or other device which requires rebooting, which can sometimes take several minutes to complete, when the power is cycled. Each battery pack **176** is individually swappable such that when one battery pack **176** is depleted it can be changed without affecting operation of the devices being powered. In operation, when one of the battery packs **176** is depleted, the user then moves the selector switch to the battery pack **176** that is fully charged. The depleted battery pack 176 can then be pulled away from the center base module **132,** overcoming the force of attraction between the magnetic fastener elements on the center base module and the battery pack, thereby allowing the user to easily change the batteries in front of the body in plain view of the user; whereas, otherwise this task is difficult to do blindly reaching around the back.

Referring now to FIG. 5 and with continued reference to FIGS. 1-4, there is shown a helmet **100** with helmet mount assembly **104** with the rear battery mounting bracket **108** configured to receive the battery pack center base module **132,** wherein the helmet mounting system further includes a battery pack adapter **180** configured to interchangeably attach to the rear battery mounting bracket **108** in place of the battery pack center base module **132.** The adapter **180** includes a receptacle **182** receiving the hot shoe **120** and a hot shoe **186** configured to attach an existing or legacy battery pack (not shown). The dedicated battery pack center base module **132** is advantageous in that it does not require an adapter and connects directly to the helmet mount assembly **104** and thereby reduces the profile of the attached battery pack in relation to the surface of the helmet. However, the battery pack adapter **180** increases the functionality of the helmet mount assembly **104** in that allows for the use of other types of battery packs, such as preexisting or legacy battery packs, such as Elbit battery packs (e.g., ENVG-B battery box), Harris L3 battery packs, and the like.

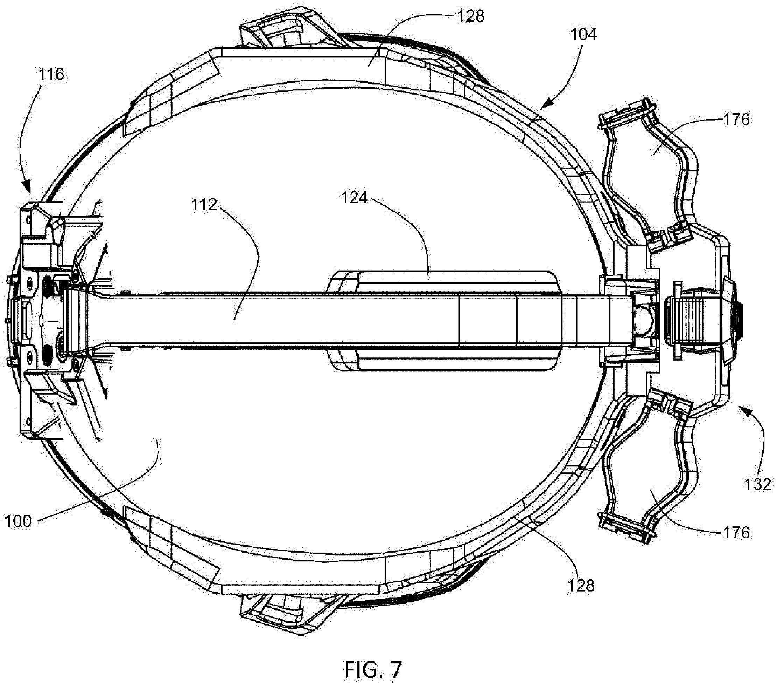

Referring now to FIGS. 6 and 7 and with continued reference to FIGS. 1-5, there is shown a helmet **100** with helmet mount assembly **104** with the rear battery mounting bracket **108** receiving the battery pack center base module **132,** as shown in FIGS. 1 and 2, respectively, wherein the battery pack center base module **132** has a battery pack **176** attached to each of the left and right side surfaces **148** thereof.

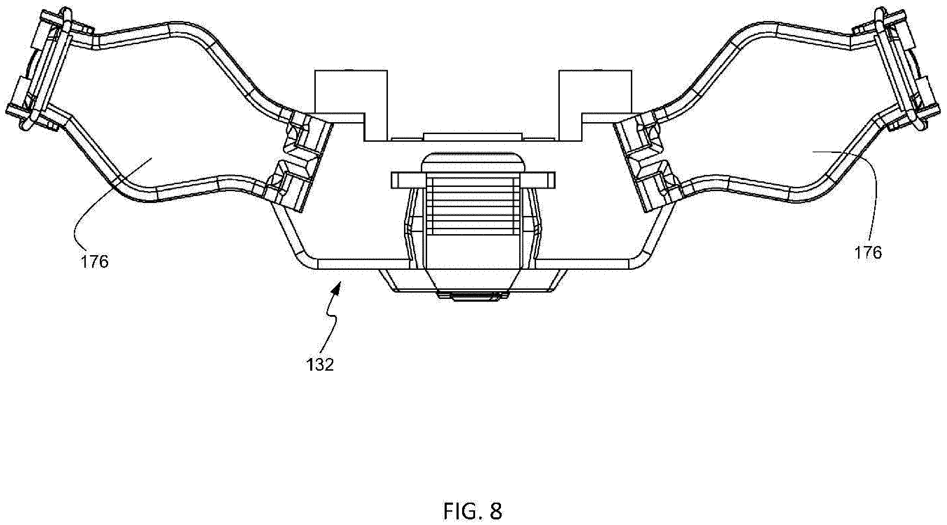

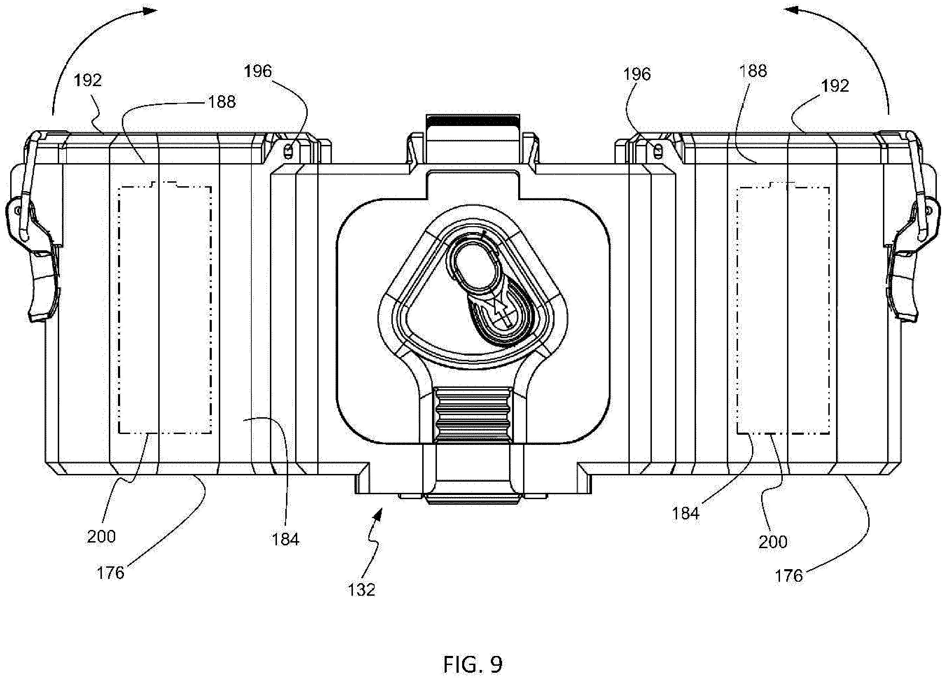

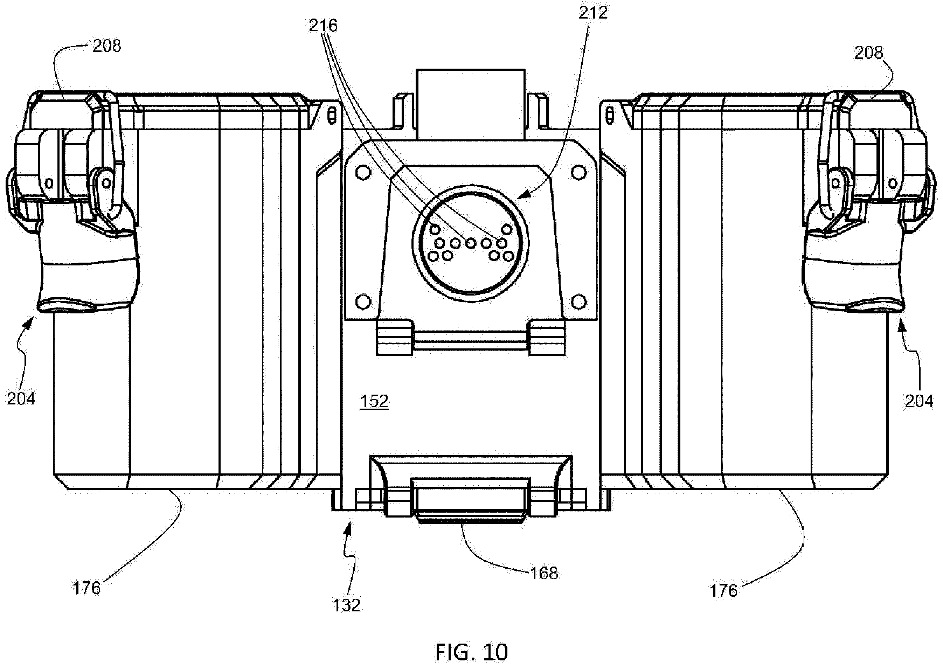

Referring now to FIGS. 8-10 and with continued reference to FIGS. 1-7, there is shown top, rear, and front views, respectively, of the battery pack center base module **132,** as shown in FIGS. 3 and 4, respectively, wherein the battery pack center base module **132** has a battery pack **176** attached to each of the left and right side surfaces **148** thereof.

In the illustrated exemplary embodiment, the battery pack **176** includes a housing **184** defining a battery compartment. The housing **184** has an open upper end **188** which is closed by a hinged cover **192.** The hinged cover **192** is pivotally attached to the housing **184** via a hinge **196** disposed at the proximal end of the cover **192** to allow opening and closing of the battery pack for insertion and removal of battery(ies) **200** into and from the housing **184.** In embodiments, housing **184** includes releasable coupling element **204,** secured to the housing **184** adjacent the distal end of the battery pack cover **192,** such as a latch (e.g., draw latch), clasp, buckle, or other releasable coupling as would be understood by persons skilled in the art. The coupling element **204** releasably engages a complementary attachment feature, such as a catch **208** disposed on the distal end of the cover **192.**

The forward facing surface **152** of the battery pack center base module **132** includes an electrical connector element **212** comprising a plurality of electrical contacts **216.** The connector element **212** is aligned with an opposing connector element **220** on the hot shoe interface **120** on the rear battery mounting bracket **108,** the connector element **220** comprising a plurality of electrical contacts **224** which are aligned with and face the electrical contacts **216** to provide communication of power, data, and control signals between the battery pack center base module **132** and the helmet mount assembly **104.**

The forward facing surface **152** of the battery pack center base module **132** further includes an electrical connector element **212** comprising a plurality of electrical contacts **216.** The connector element **212** is aligned with an opposing connector element **220** on the hot shoe interface **120** on the rear battery mounting bracket **108,** the connector element **220** comprising a plurality of electrical contacts **224** which are aligned with and face the electrical contacts **216.**

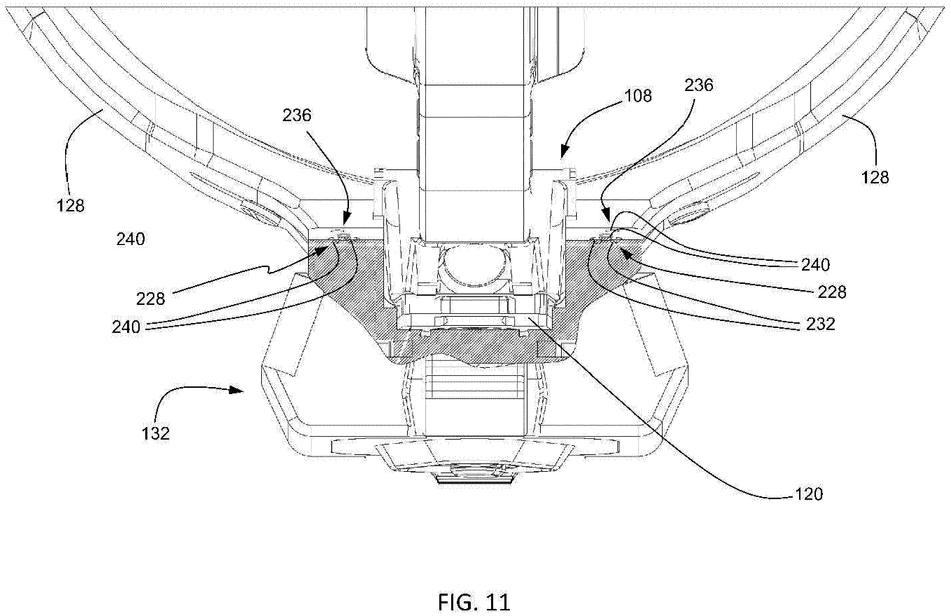

Referring now to FIG. 11, and with continued reference to FIGS 1-10, there is shown a top view illustrating the battery pack center base module **132** attached to the rear battery mounting bracket **108,** wherein a portion of the battery pack center base module **132** is cutaway to show the hot shoe **120** within the hot shoe receptacle **160.** The forward facing surface **152** of the battery pack center base module **132** further includes a left and right electrical connector elements **228** comprising a plurality of electrical contacts **232.** The connector elements **228** are aligned with opposing left and right connector elements **236** on the left and right helmet brackets **128,** respectively. The connector element **236** includes a plurality of electrical contacts **224** which are aligned with and face the electrical contacts **232.**

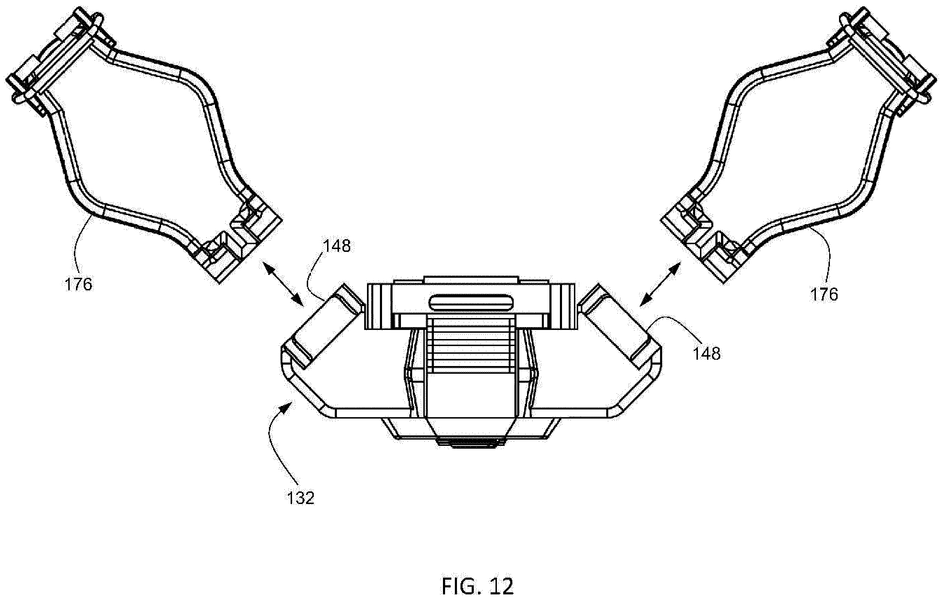

Referring now to FIG. 12, and with continued reference to FIGS. 1-11, there is shown the battery pack center base module **132** with the left and right battery packs **176** spaced apart from the respective left and right side surfaces **148,** illustrating the manner of attachment and removal of the battery packs **176** from the battery pack center base module **132.**

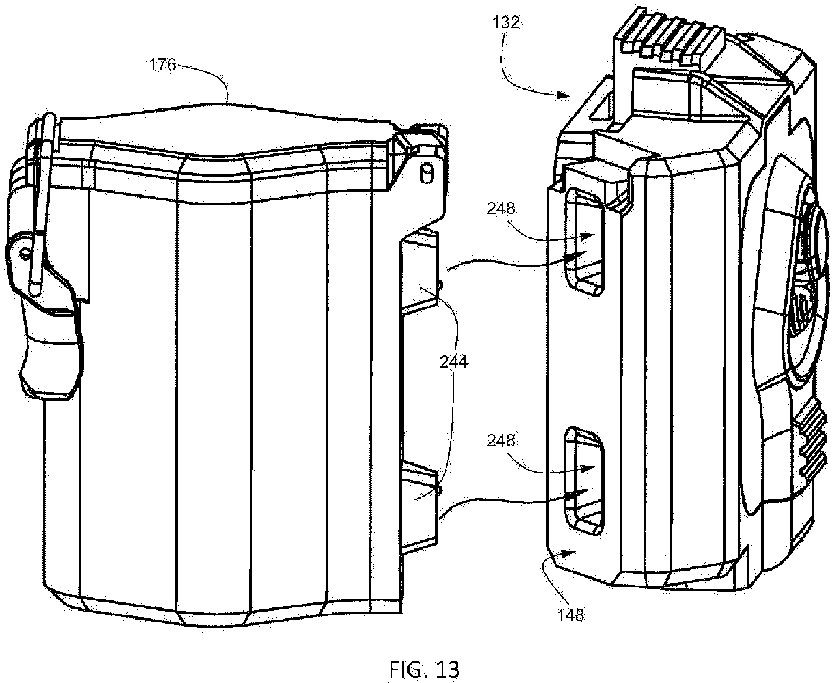

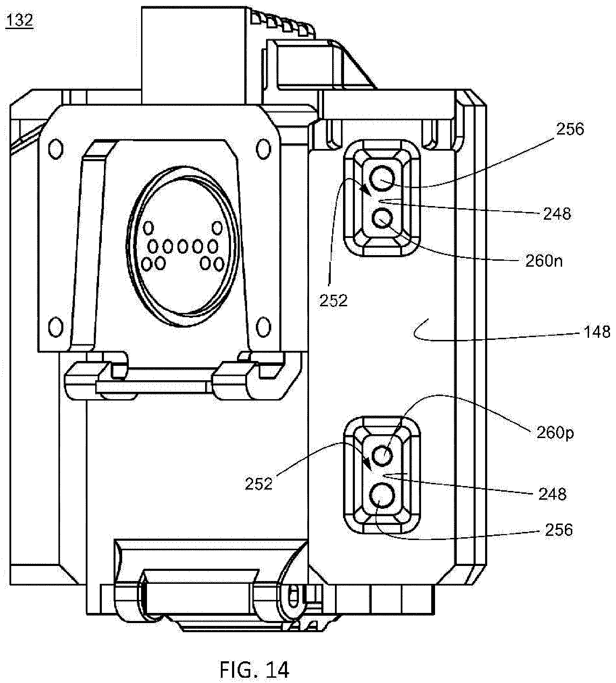

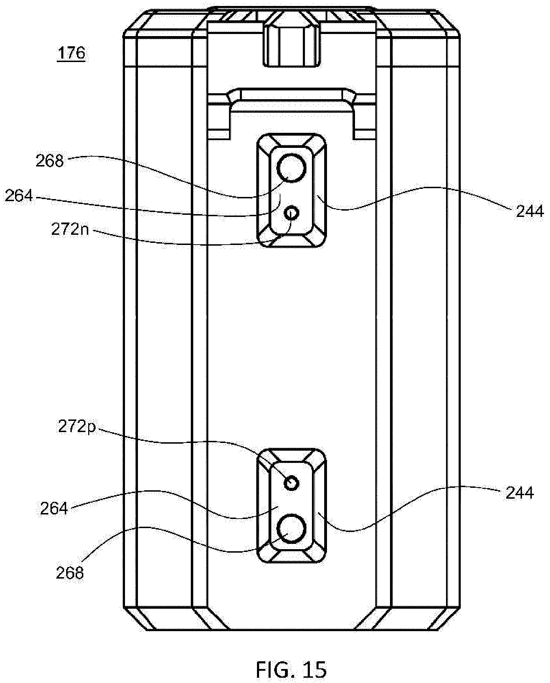

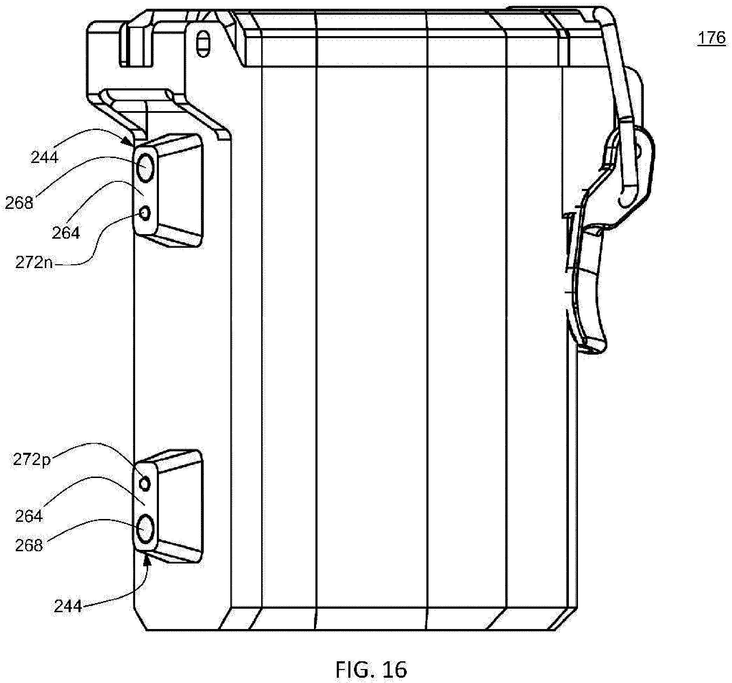

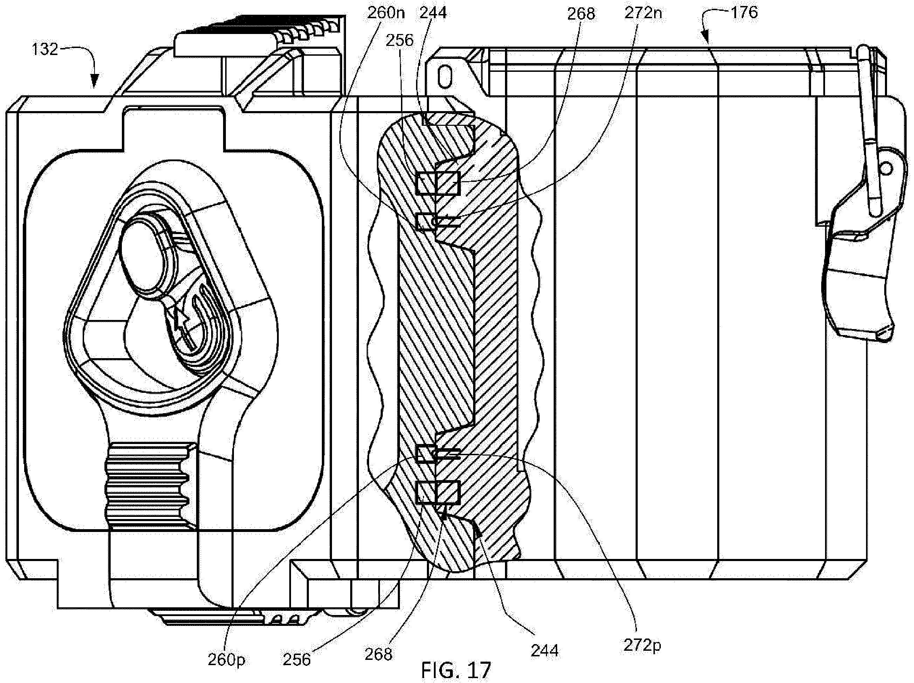

Referring now to FIGS. 13-17, and with continued reference to FIGS. 1-12, there is illustrated the manner of attachment of the battery packs **176** to the battery pack center base module **132.** The battery pack housing **184** includes a pair of frusto-pyramidical lugs **244** which releasably seat in correspondingly shaped receptacles or sockets **248** formed in the side surface **148** of the battery pack center base module **132.** It will be recognized that the lugs **244** may have other geometrical configurations, such as frusto-conical, truncated triangular pyramid, and so forth. A base surface **252** of each receptacle **248** includes a magnetic fastener element **256** and an electrical contact **260p, 260n.** An upper surface **264** of each lug **244** includes a magnetic fastener element **268** is aligned with the magnetic fastener element **256** and an electrical contact **272p, 272n** which is aligned with a respective one of the electrical contacts **260p, 260n.** In embodiments, the electrical contact **272n** is electrically coupled to the negative terminal of the battery(ies) **200** in the battery pack **176** and the electrical contact **272p** is electrically coupled to the positive terminal of the battery(ies) **200** in the battery pack **176.**

In certain embodiments, the magnetic fastener elements **256** and **268** are each permanent magnets wherein the aligned faces are of opposite polarity to provide a physical connection between the battery pack center base module **132** and the battery pack **176** when the lugs **244** are inserted into the sockets **248.** In alternative embodiments, for each of the magnetic fastener element pairs **256, 268,** one is a permanent magnet and the other is formed of a magnetically attractable material such as a ferromagnetic metal to provide a physical connection between the battery pack center base module **132** and the battery pack **176.** In operation, to remove the battery pack **176** from the battery pack center base module **132** the user exerts a pulling force on the battery pack **176** which is greater than the magnetic force of attraction between the fastener elements **256, 268.**

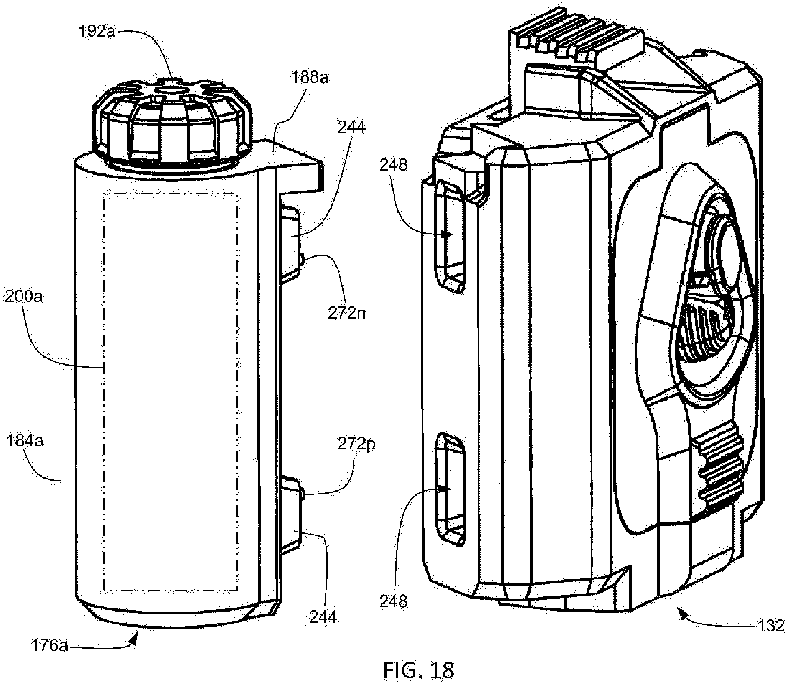

Referring now to FIG. 18, and with continued reference to FIGS. 1-17, there appears the battery pack center base module **132** and a first alternative embodiment battery pack **176a.** In the illustrated exemplary embodiment, the battery pack **176a** includes a housing **184a** defining a battery compartment configured to receive a single AAA battery **200a.** The housing **184a** has an open upper end **188a** which is closed by a removable threaded cap **192a.**

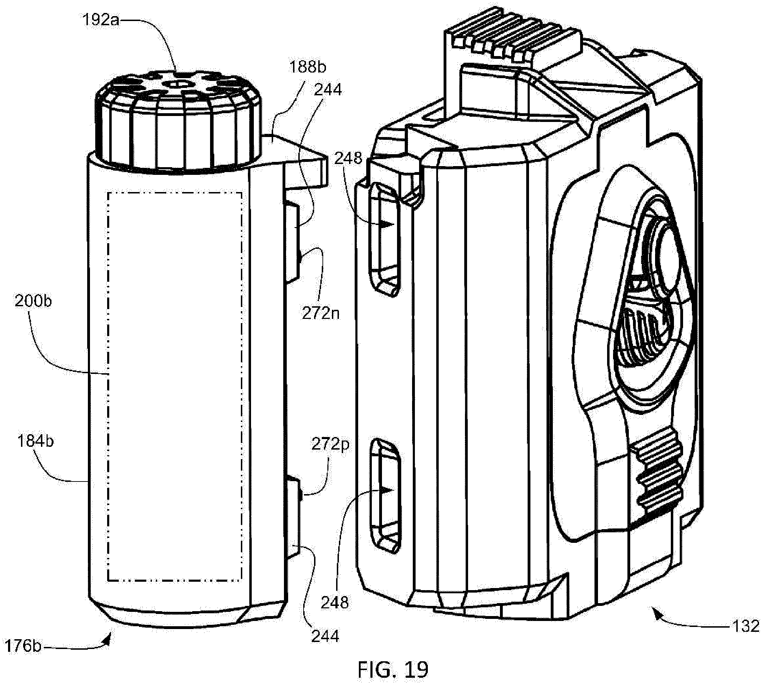

Referring now to FIG. 19, and with continued reference to FIGS. 1-18, there appears the battery pack center base module **132** and a second alternative embodiment battery pack **176b.** In the illustrated exemplary embodiment, the battery pack **176b** includes a housing **184b** defining a battery compartment configured to receive a single CR123A battery **200b.** The housing **184b** has an open upper end **188b** which is closed by a removable threaded cap **192a.**

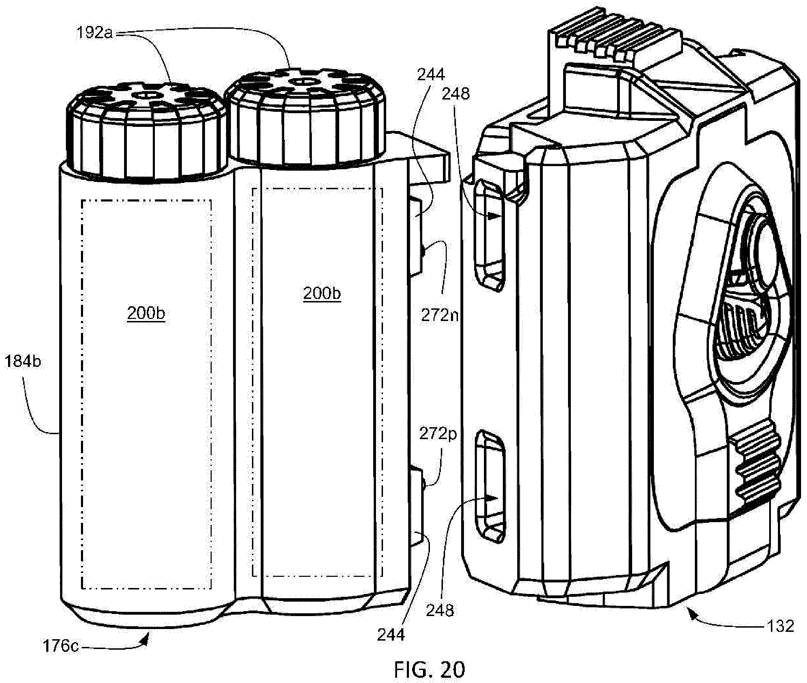

Referring now to FIG. 20, and with continued reference to FIGS. 1-19, there appears the battery pack center base module **132** and a third alternative embodiment battery pack **176c.** In the illustrated exemplary embodiment, the battery pack **176c** includes a housing **184c** defining two battery compartments each configured to receive a CR123A battery **200b.** The battery compartments have an open upper ends which are closed by removable threaded caps **192a.**

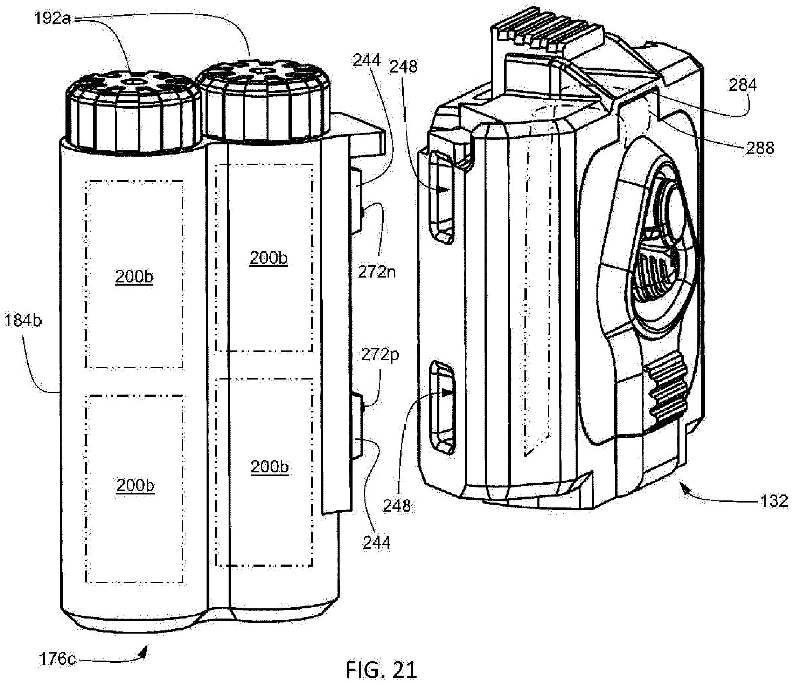

Referring now to FIG. 21, and with continued reference to FIGS. 1-20, there appears the battery pack center base module **132** and a fourth alternative embodiment battery pack **176d.** In the illustrated exemplary embodiment, the battery pack **176d** includes a housing **184d** defining two battery compartments each configured to receive two CR123A batteries **200b.** The battery compartments have an open upper ends which are closed by removable threaded caps **192a.**

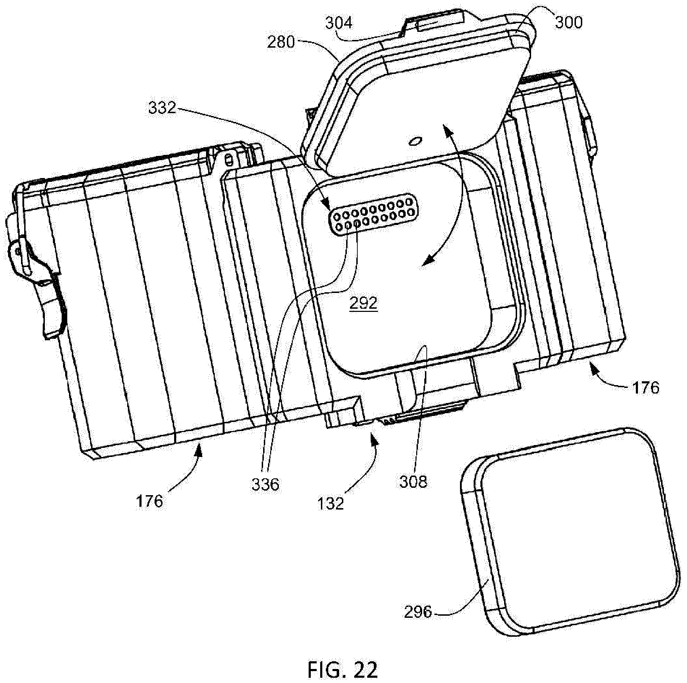

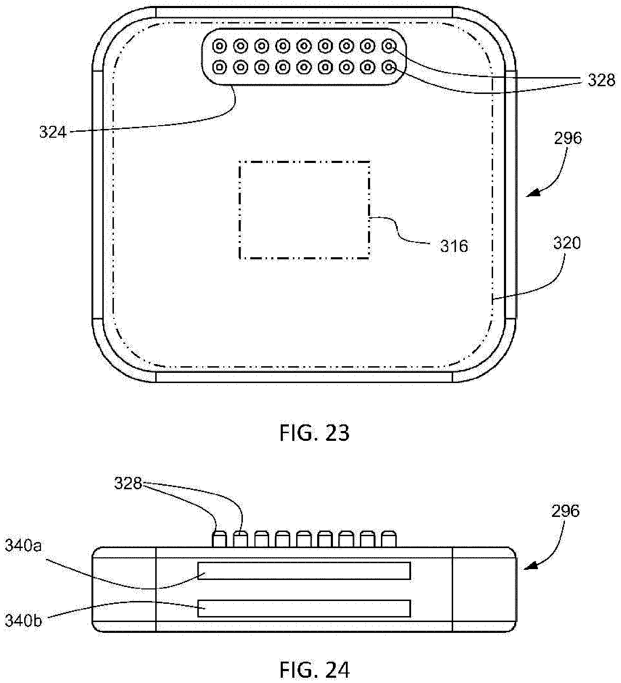

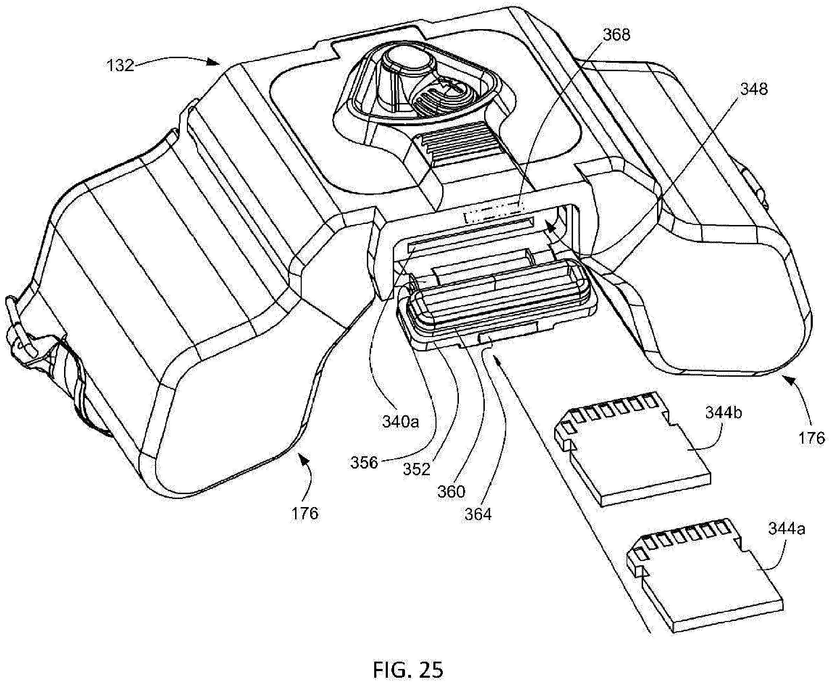

Referring now to FIGS. 22-25, and with continued reference to FIGS. 1-21, the battery pack center base module **132** includes a hatch door **280** on the rear surface **156** of the main body **136** which covers a cavity **292** configured to receive a modular processing board cartridge **296.** The door **280** is pivotable about a hinge **284.** The battery pack selector switch **172** is electrically coupled to the electrical components within the main body **136** via a flex circuit **288** which passes through the hinge **284** and which includes circuit conductors or traces formed on a flexible substrate such as a flexible tape or film material, which may be formed, e.g., of a polymeric material. An elastomeric O-ring or gasket **300** is provided to seal against entry or moisture or other contamination into the cavity **292.** The door **280** is retained in the closed position via a latch member **304** releasably engaging a catch **308** on the main body **136** housing. The door **280** is opened by manually disengaging the latch member **304** from the catch using a latch release **312** disposed on the door **280.**

The modular processing board cartridge **296** includes a main board **316** including a processor **320,** such as microprocessor, central processing unit, microcontroller, or the like, including an associated memory and processing electronics. A connector interface **324** includes a plurality of electrical contacts **328** which engage aligned electrical contacts **336** on a mating connector **332** disposed in the cavity **292.** In embodiments, the contacts **328** are spring loaded pogo pins of the type comprising a barrel, plunger and encapsulated spring and the contacts **336** are complementary contact pads. The modular processing board cartridge **296** allows the processing capability of the battery pack center base module **132** to be swapped and updated. In certain embodiments, the cartridge dimensions and pin locations are controlled with an interface control document (ICD) to provide an open architecture allowing other manufacturers to make their own customized processing units tailored for specific electrical and processing requirements. In such embodiments, the center base module **132** is an "open architecture" platform allowing other manufactures to install their own unique electronic circuity in the cavity **292.**

The modular processing board cartridge **296** includes first and second card slots **340a** and **340b** for receiving first and second nonvolatile memory cards **344a** and **344b,** respectively, such as flash memory cards, Secure Digital (SD) cards, or the like. The modular processing board cartridge **296** is inserted and removed via the hatch door **280.** In certain embodiments, one of the card slots **340a, 340b** is used for expandable storage, to upload mission profiles, and/or for software/firmware upgrades, and the other one of the card slots **340a, 340b** is used for programming logic and the operating system.

The first and second nonvolatile memory cards **344a** and **344b** are inserted and removed from the first and second card slots **340a** and **340b** through an opening **348** in the bottom surface **144** of the battery pack center base module **132.** The opening **348** is covered by a bottom door **352** which is attached to the main body **136** via a hinge **356.** An elastomeric O-ring or gasket **360** provides a sealing interference between the door **352** and the main body **136** to prevent entry of moisture or other contamination into the cavity **292** or cartridge **296.** A releasable latch **364** on the bottom door **352** engages a catch **368** on the main body **136.**

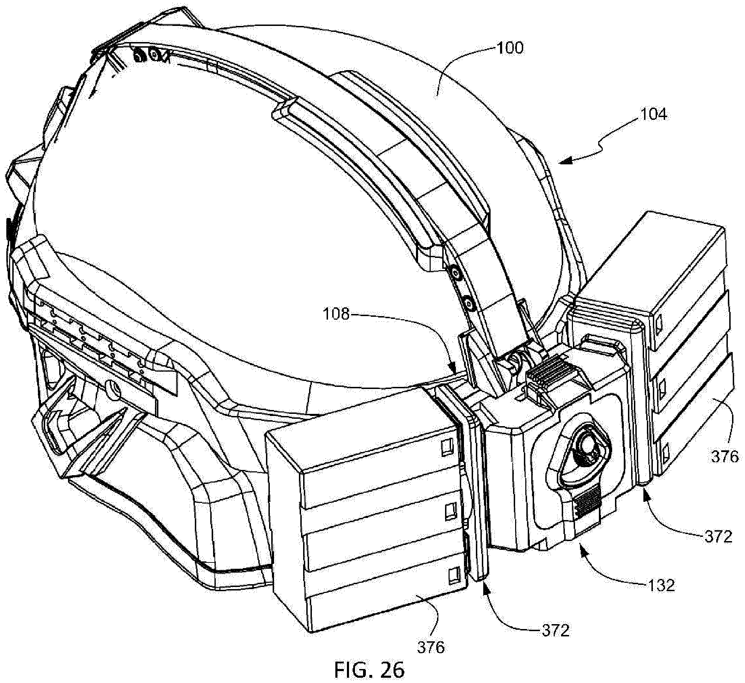

Referring now to FIG. 26 and with continued reference to FIGS. 1-25, there is shown a helmet **100** with helmet mount assembly **104** with the rear battery mounting bracket **108** receiving the battery pack center base module **132,** as shown in FIG. 1, wherein the battery pack center base module **132** has left and right Small Tactical Universal Battery (STUB) battery packs **376** attached to each of the left and right side surfaces **148** of the battery pack center base module **132** via STUB adapters **372.**

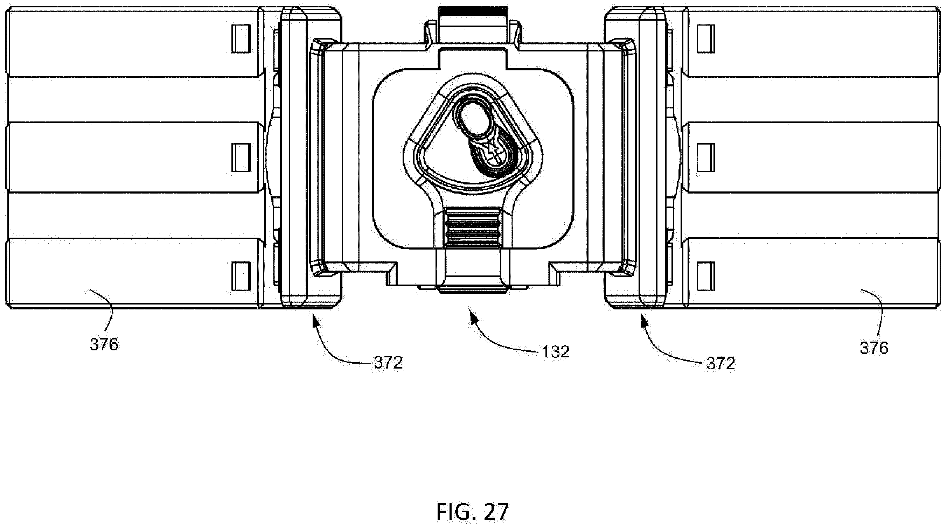

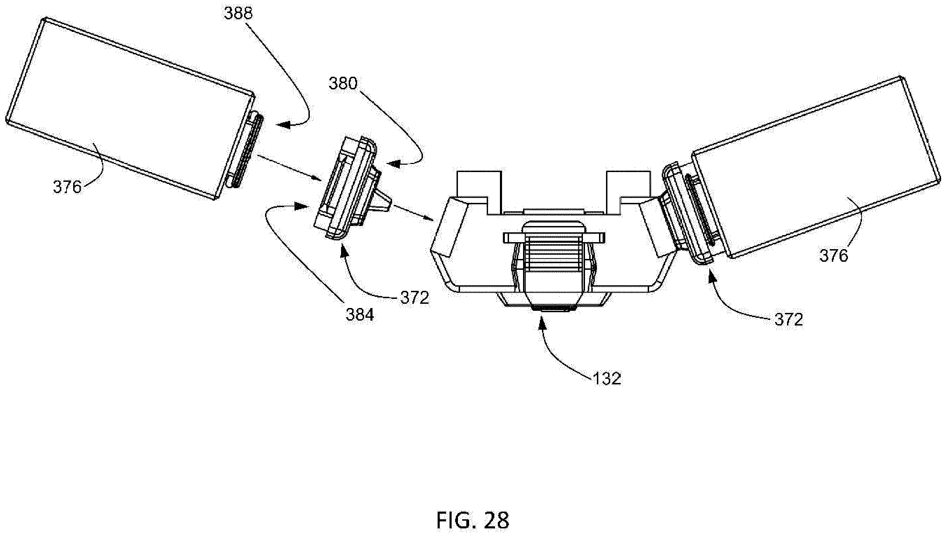

Referring now to FIGS. 27 and 28, and with continued reference to FIGS. 1-26, each STUB adapter **372** has a first interface surface **380** configured to detachably engage with the side surfaces **148** on the battery pack center base module **132** and a second interface surface **384** opposite the first interface surface **380** configured to detachably engage with a standard STUB battery pack interface **388.**

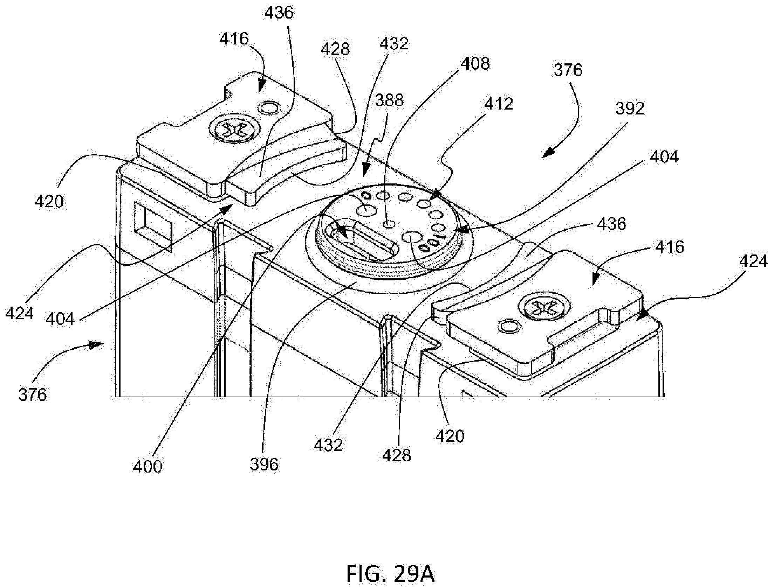

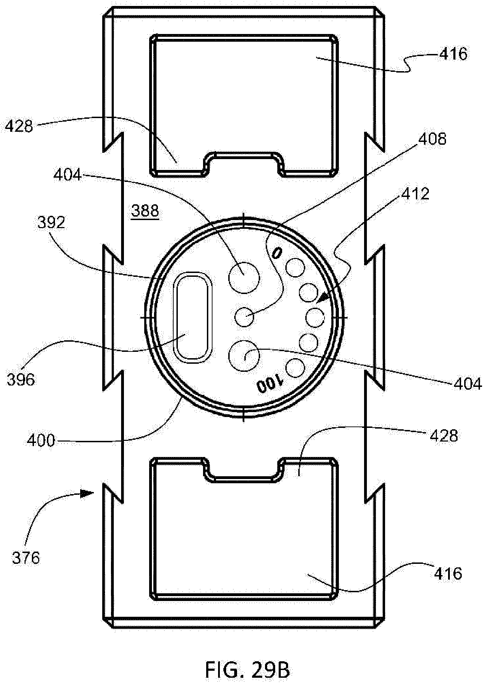

Referring now to FIGS. 29A and 29B, and with continued reference to FIGS 1-28, there is shown an exemplary STUB battery pack **376** which includes an interface surface **388.** In the illustrated embodiment, the STUB interface surface **388** includes a center terminal **392.** The center terminal includes an elastomeric sealing ring **396** for sealing between the terminal **392** and the housing of the battery pack **376.** The terminal **392** includes a USB-C charging port **400,** power terminals **404 404,** a control signal terminal **408,** and state of charge indicia **412.** In certain embodiments, the STUB battery pack **376** may be generally as described in U.S. Patent Application Publication No. 2022/0216554 published on July 7, 2022.

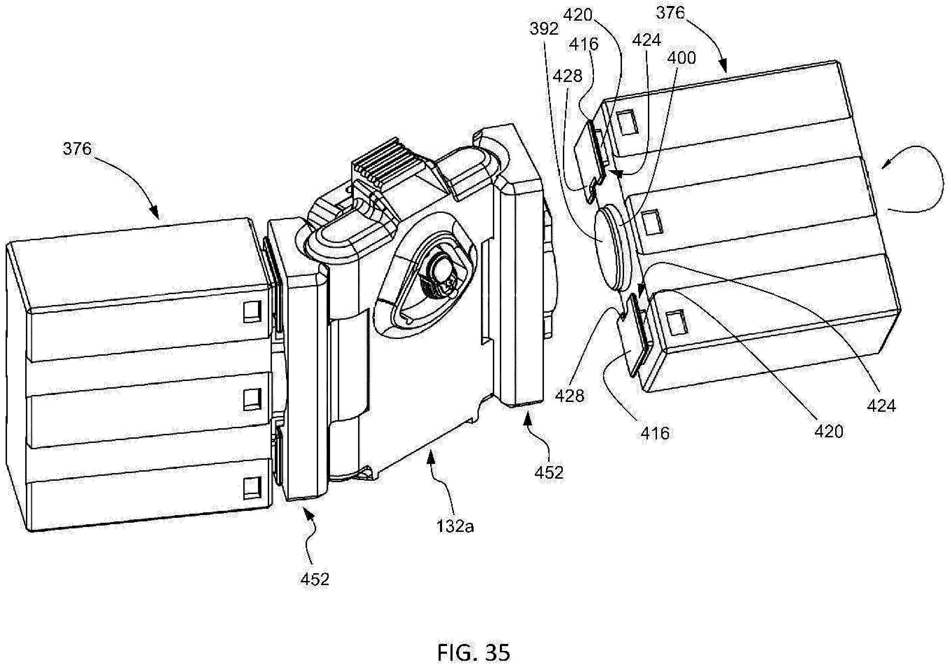

Tabs **416** are disposed at opposing ends of the interface surface **388** and are supported on respective posts or bosses **420** (see FIG. 35) to define a peripheral retention channel **424** between the tabs and the interface surface **388.** The tabs **416** include bayonet or twist type retention elements **428** for attachment of the battery pack **376** to the adapter surface **384** via twisting movement of the battery pack **376** relative to the stub adapter second interface surface **384.**

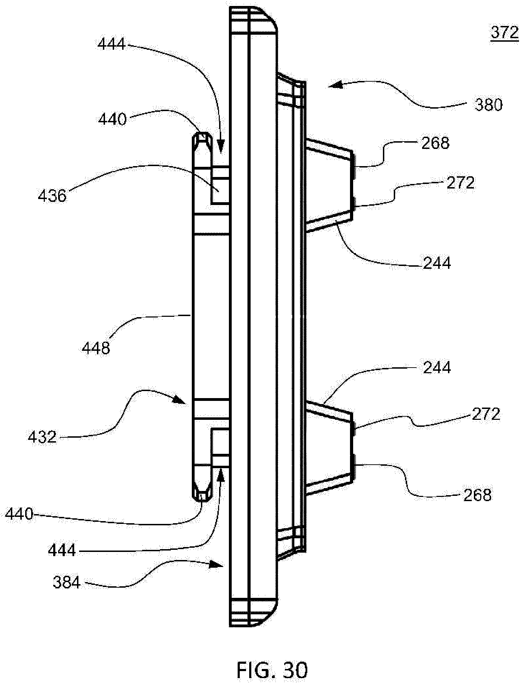

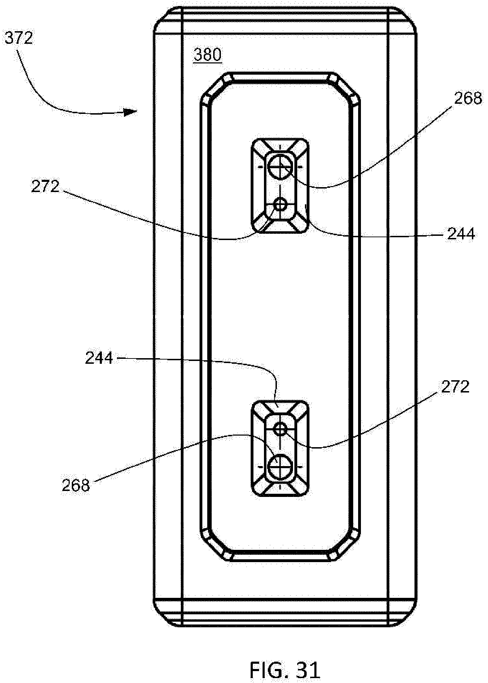

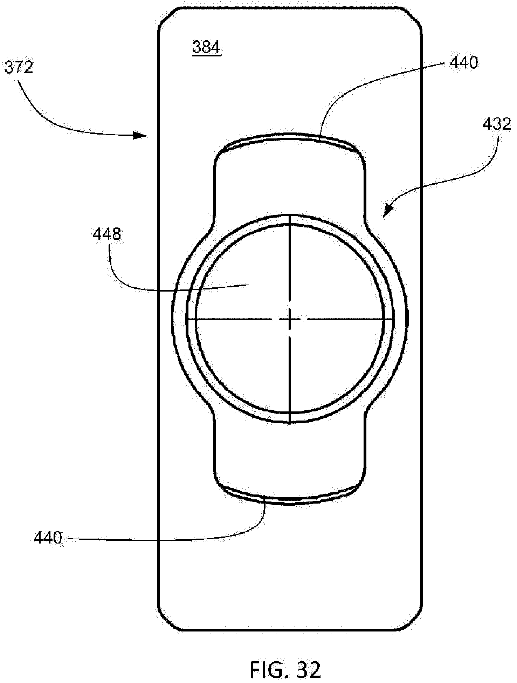

Referring now to FIGS. 30-32, and with continued reference to FIGS 1-29B, the adapter first interface surface **380** includes a pair of connector lugs **244** as described above each having a magnet fastener element **268** and an electrical connector element **272.** The adapter **372** is physically attached and detached from the side surfaces **148** of the battery pack center base module **132** via the magnetic fastener elements as described above.

The second adapter interface surface **384** includes a bayonet type mount **432** including a center post **436** and opposing ears **440.** The ears **440** extend from the post **436** to define a retention groove **444** between each of the ears **440** and the surface **384.** A center terminal **448** on the bayonet mount assembly **432** is aligned with the center terminal **392,** which includes terminals that are electrically coupled to the terminals **272** on the first interface surface **380** to electrically couple the battery pack **376** to the battery pack center base module **132.**

In operation, to attach the battery pack **376** to the adapter second interface surface **384,** the battery pack **376** is positioned so that the center terminals **392** and **448** are aligned and the twist retention elements **428** on the STUB battery pack **376** are angularly offset with respect to the bayonet ears **440** on the adapter second interface **384.** The STUB battery pack **376** is then rotated to cause the twist retention elements **428** to engage the retention grooves **444.** To remove the battery pack **376** from the adapter second interface surface **384,** the process is reversed.

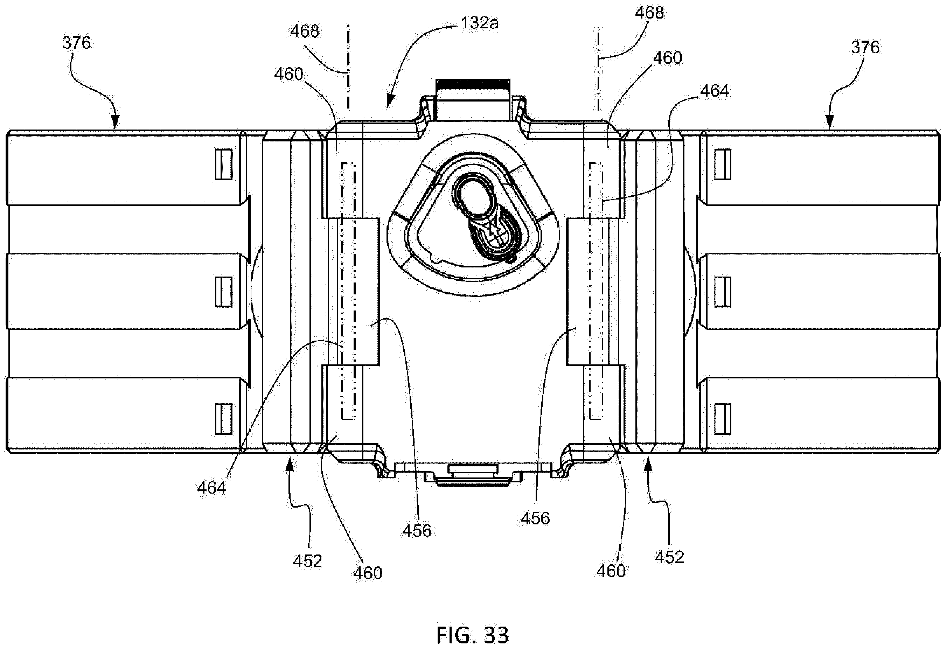

Referring now to FIGS. 33-35 and with continued reference to FIGS. 1-32, there is shown a second embodiment battery pack center base module **132a,** which is as described above by way of reference to the battery pack center base module **132,** except that the left and right side surfaces **148** have been replaced with hinged STUB attachment interface assemblies **452.**

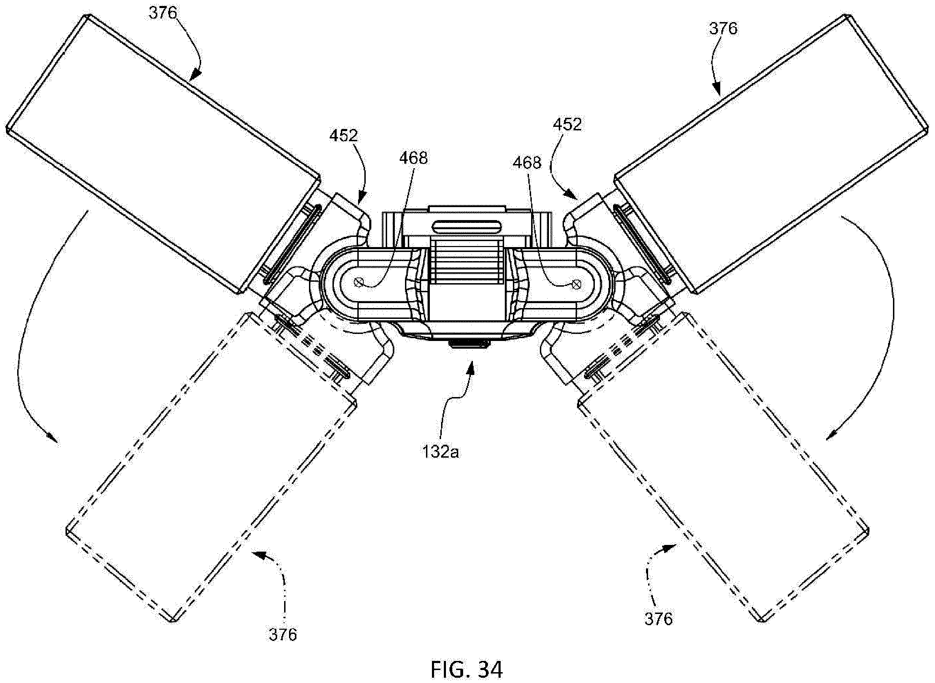

In certain embodiments, the hinge interface assemblies **452** each include a hinge knuckle **456** intermeshed between two hinge knuckles **460** on a main body **136a** of the battery pack center base module **132a** and rotatably attached with a hinge pin **464,** each defining a pivot axis **468.** As best seen in FIG. 34, the hinged connection allow the battery packs **376** to be pivoted about the axis **468** toward the helmet during normal use (as shown in solid lines in FIG. 34), and to be pivoted away from the helmet (as shown in broken lines in FIG. 34) when it is desired to remove or replace the battery pack **376.**

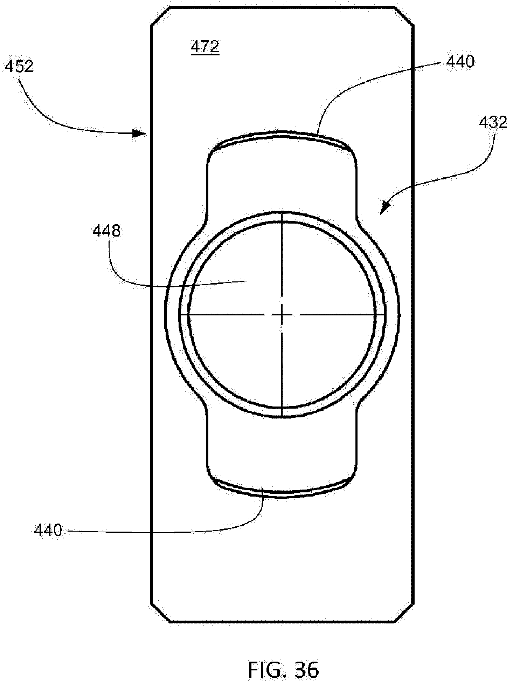

Referring now to FIG. 36, and with continued reference to FIGS. 1-35, there is shown an interface surface **472** of the hinge assembly **452** which is configured to detachably engage with the interface surface **388** (see FIGS. 29A and 29B) of the STUB battery pack **376.** The interface surface **472** includes a bayonet type mount **432** including a center post **436** (see FIG. 30) and opposing ears **440.** The ears **440** extend from the post **436** to define a retention groove **444** (see FIG. 30) between each of the ears **440** and the surface **472.** A center terminal **448** on the bayonet mount assembly **432** is aligned with the center terminal **392,** which includes terminals that engage the terminals **404** to electrically couple the battery pack **376** to the battery pack center base module **132a.**

In operation, to attach the battery pack **376** to STUB hinge interface **472,** the battery pack **376** is positioned so that the center terminals **392** and **448** are aligned and the twist retention elements **428** on the STUB battery pack **376** are angularly offset with respect to the bayonet ears **440** on the hinge interface **472.** The STUB battery pack **376** is then rotated to cause the twist retention elements **428** to engage the retention groove **444.** To remove the battery pack **376** from the hinge interface **472,** the hinged adapter **452** is pivoted so that the interface surface **472** faces away from the helmet and battery pack **376** is twisted until the twist retention elements **428** disengage from the retention grooves **444.**

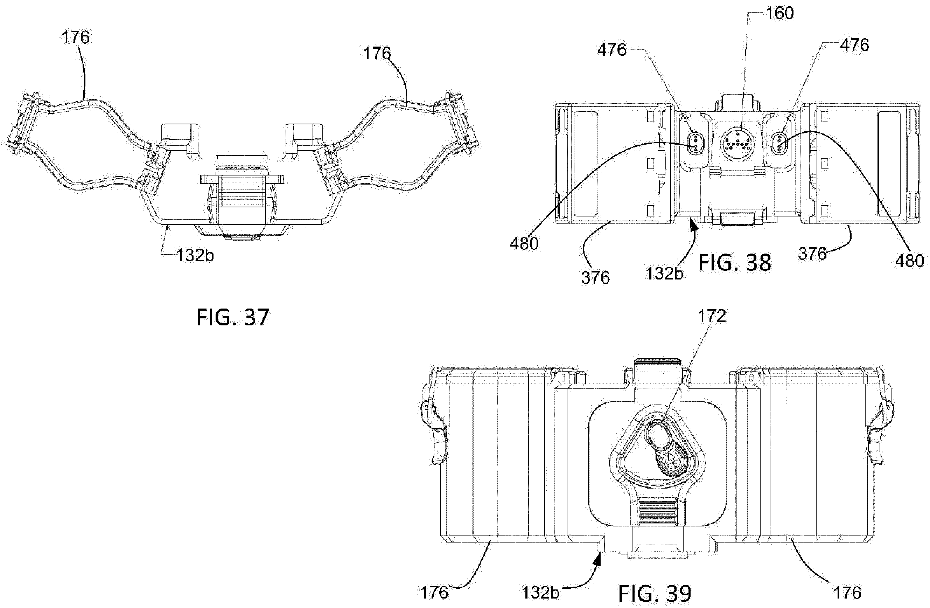

Referring now to FIGS. 37-39, there is shown a third embodiment battery pack center base module **132b** with left and right battery packs. In FIGS. 37 and 39, the battery packs are battery packs **176.** In FIG. 38, the battery packs are STUB battery packs **376.** The battery pack center base module **132b** includes left and right power and data connectors **476** having power and data contacts **480.** The left and right power and data connectors **476** are disposed on opposite sides of the hot shoe receptacle **160.** In embodiments, the battery pack center base module **132b** may be in other respect as described above by way of reference to the battery pack center base module **132** except as other otherwise specified herein.

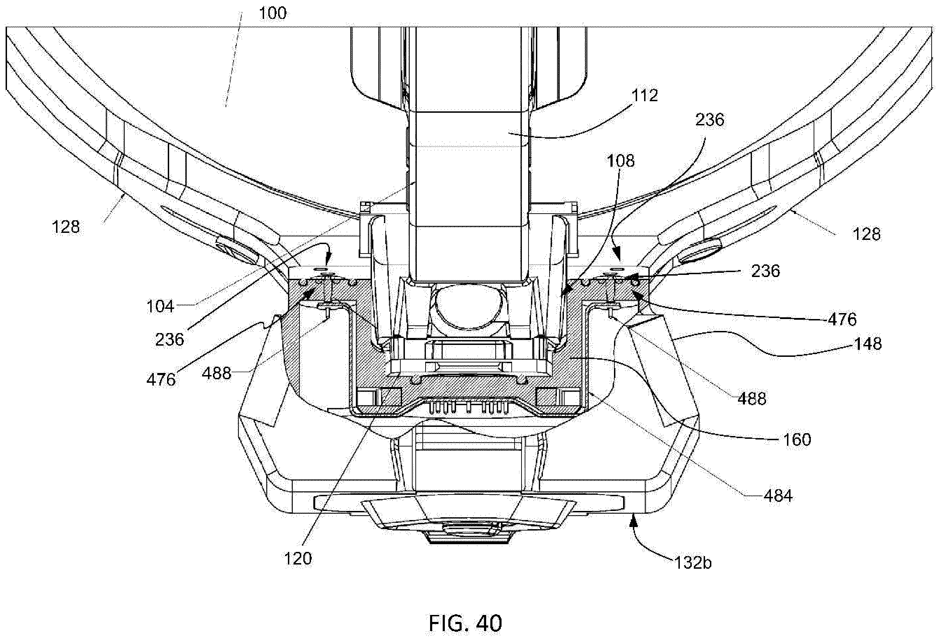

As best seen in FIG. 40, the connectors **480** on the battery pack center base module **132a** connect to corresponding the left and right side shrouds or brackets **128** of the helmet mount assembly **104.** A circuit board **484** is disposed within the housing of the battery pack center base module **132b** which has left and right power and data contacts **488** thereby electronically and electrically bridging the bridging the left and right ear brackets **128.** The circuit board **484** is also operably coupled to the circuitry within the center strap/cable cover **112** via the hot shoe interface **120** Finally, the circuit board **484** is operably coupled to the control board or processing board **296** in the battery pack center base module **132b.** In this manner the battery pack center base module **132b** has connections to bridge or tie the right and left ear brackets **128** together as well as connect the control board in the battery box to the helmet mount assembly **104.**

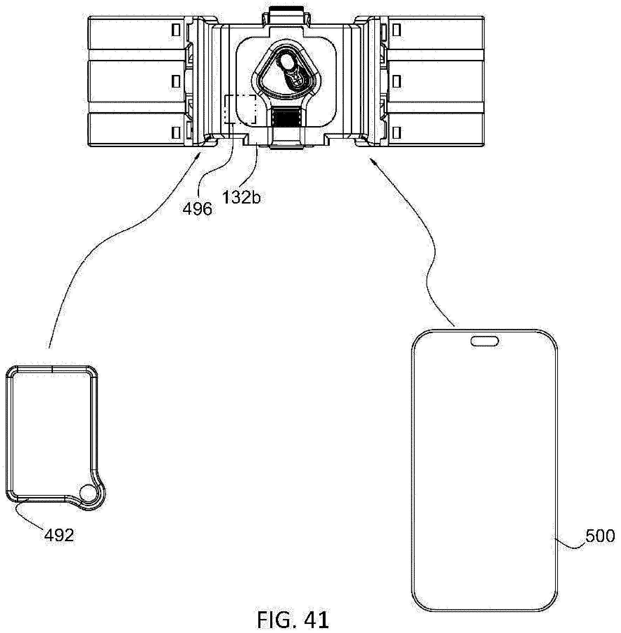

FIG. 41 illustrates two alternative methods of programming a modular processing board cartridge 296 within the battery pack center base module **132b,** e.g., for a specific mission profile.

In a first programming method, the modular processing board cartridge **296** within the battery pack center base module **132b** is programmed using an application on a mobile phone or other mobile device **500** which is paired with the battery pack center base module **132b** via an RF communication protocol, such as Bluetooth.

In a second method, a wireless RFID (Radio Frequency Identification) token or tag **492** is provided, which uses radio waves to communicate with an RFID reader **496** within the battery pack center base module **132b.** The token **492,** which may be active or passive is advantageously used for changing the configuration of multiple battery pack center base modules for mass programming.

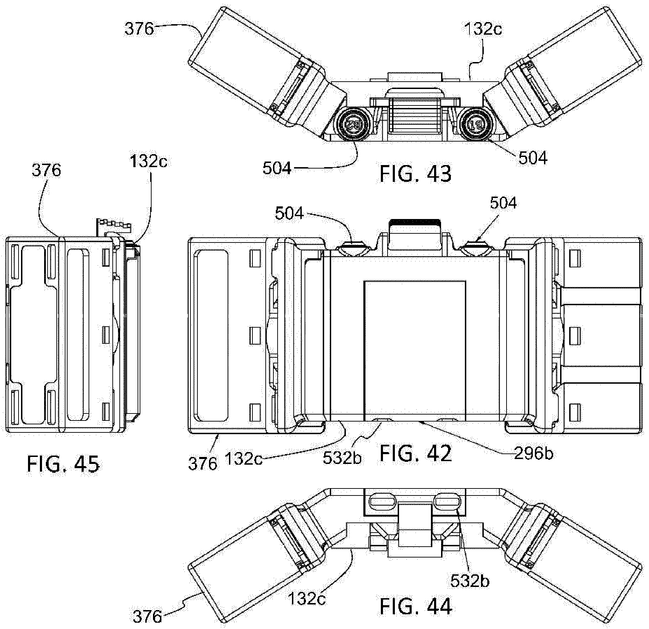

Referring now to FIGS. 42-46, there is shown a fourth embodiment battery pack center base module **132c,** which is configured for use with an interface control document (ICD) controlled smart cartridge. The battery pack center base module **132c** may be generally as described above by way of reference to the battery pack center base module **132,** except that rather than the battery lever switch for selecting between the left and right battery packs, dedicated left and right push button battery selector switches **504** are provided. In operation, each battery source can be activated by pressing the respective button **504.** The right and left side batteries each have button activation control, B1 and B2, respectively. By selecting B1, the device will use power from battery 1 and disconnect power from battery 2, and vice versa. In embodiments, the push button switches are operable to provide uninterrupted power when switching between batteries to prevent inadvertently power cycling an attached accessory device.

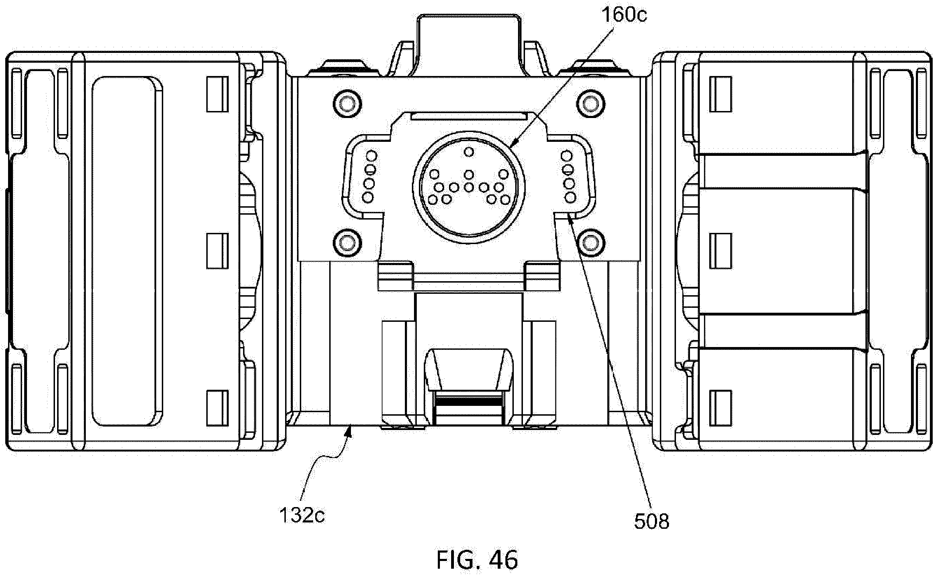

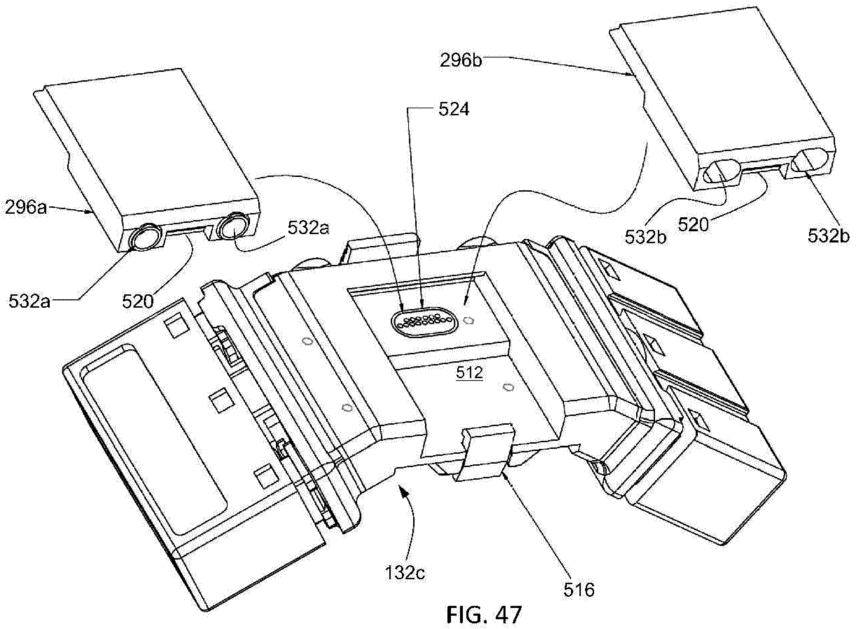

Referring now to FIG. 46, the battery pack center base module **132c** has a modified hot shoe interface **160c** which has additional hot shoe pins **508** to connect the helmet mount assembly **104** to the battery pack center base module **132c.** This bridges power and data from the control cartridge **296a, 296b** (see FIGS 47-52, through the battery pack center base module **132c** and helmet mount assembly **104** to the powered side rail interfaces **128,** the identification friend or foe system (IFF) **124,** as well as headset, flashlight, and other integrated systems. In embodiments, an Interface Control Document is provided to specify, e.g., the pin-out and electrical characteristics of each contact, their functions (power, data, ground, drain, control signals, etc.), voltage levels, signal types, and other relevant parameters.

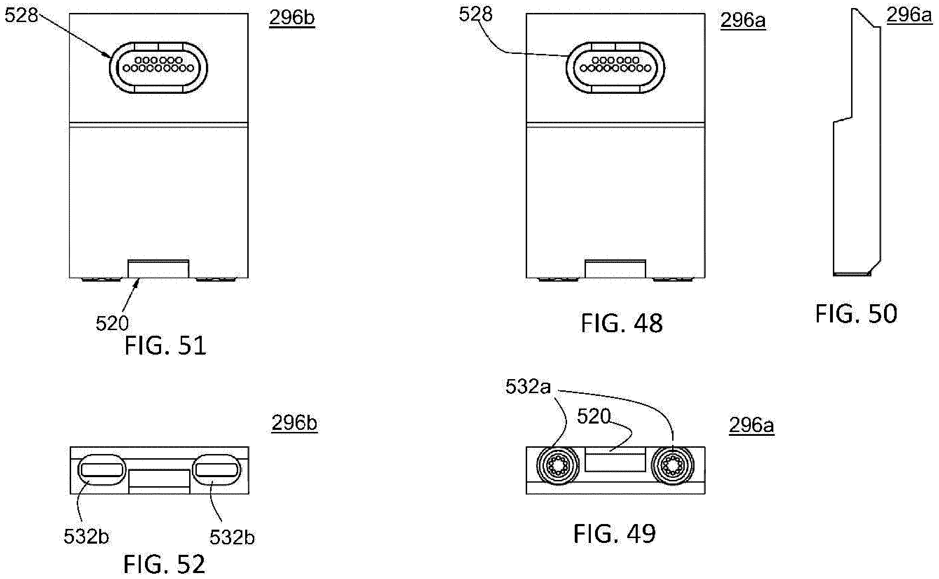

Referring now to FIGS. 47-52, the battery pack center base module **132c** includes a recess or receptacle **512** configured to interchangeably receive a plurality of cartridge styles **296a, 296b.** A latch **516** engages a complementary catch **520** on the cartridge **296a, 296b** to releasable retain the cartridge **296a, 296b** within the receptacle **512.** An electrical interface **524** within the receptacle **512** operably engages a mating electrical interface **528** on the cartridge **296a, 296b.** As best seen in FIG. 50, the cartridge **296a, 296b** housing has a stepped profile which is complementary with the profile of the receptacle **512.** In interface connection preferably uses sealing elements to ingress of moisture, dust, or other external contamination.

Referring now to FIGS 48-50, there is shown a first cartridge style **296a,** which includes Fischer connectors **532a.** Fischer connectors are commercially available from Fischer Connectors SA (Saint-Prex, Switzerland). Referring now to FIGS 51 and 52, there is shown a second cartridge style **296b,** which includes USB Type-C connectors **532b.** In embodiments, the connectors **532b** are ruggedized U.S.C. § Type-C connectors. The connectors **532a, 532b** provide a power, data, and/or control input and/or output interface to the battery pack center base module **132c** and helmet mount assembly **104** powered side rail interfaces **128.**

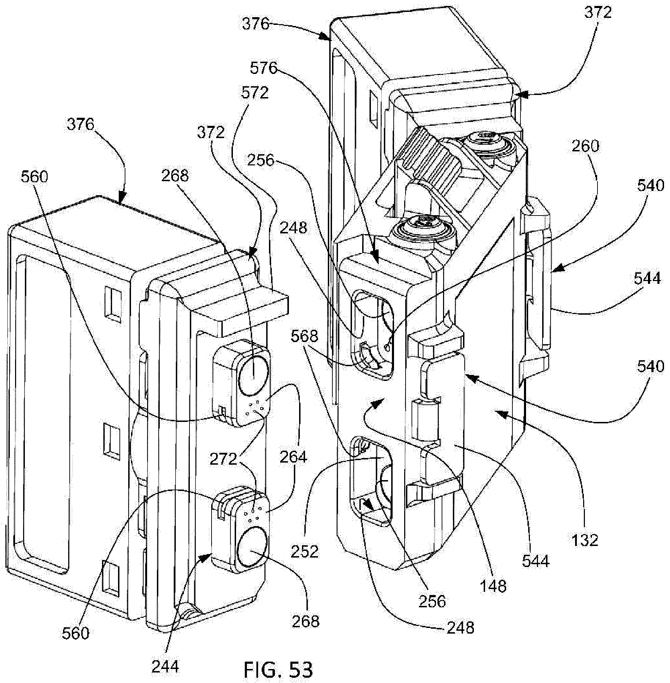

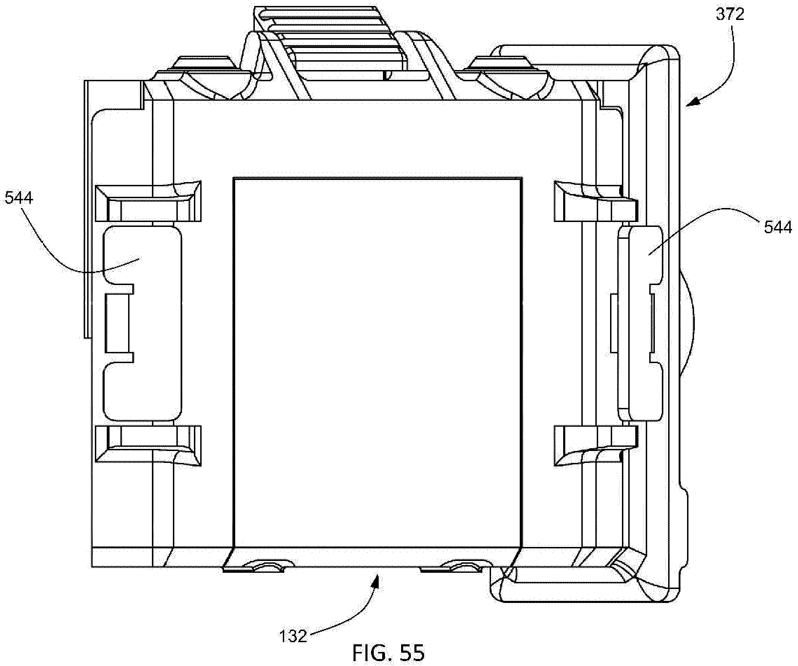

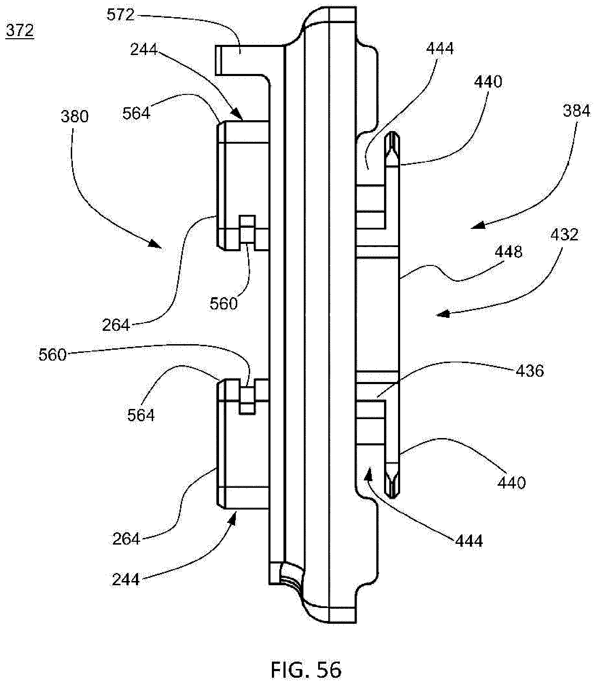

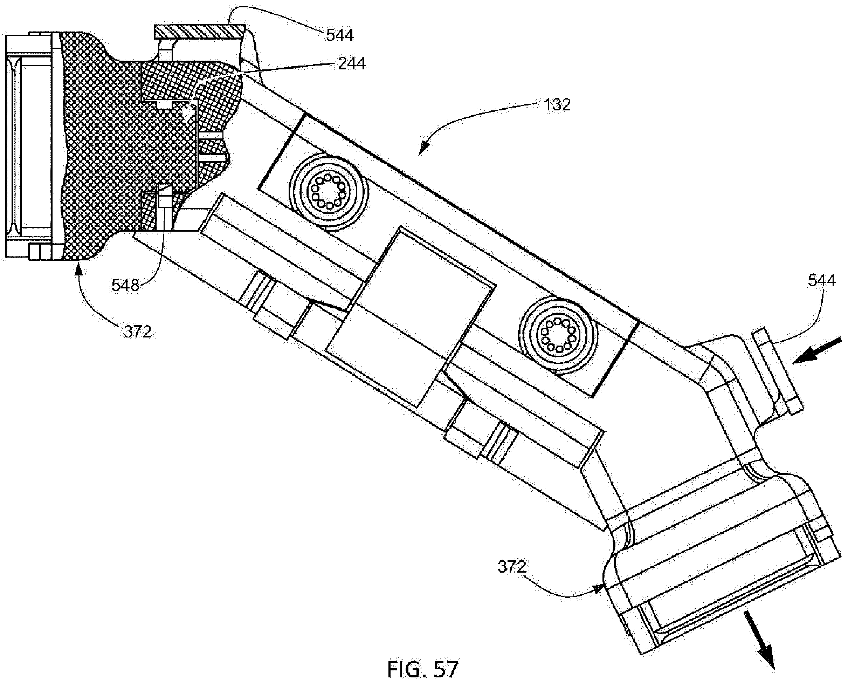

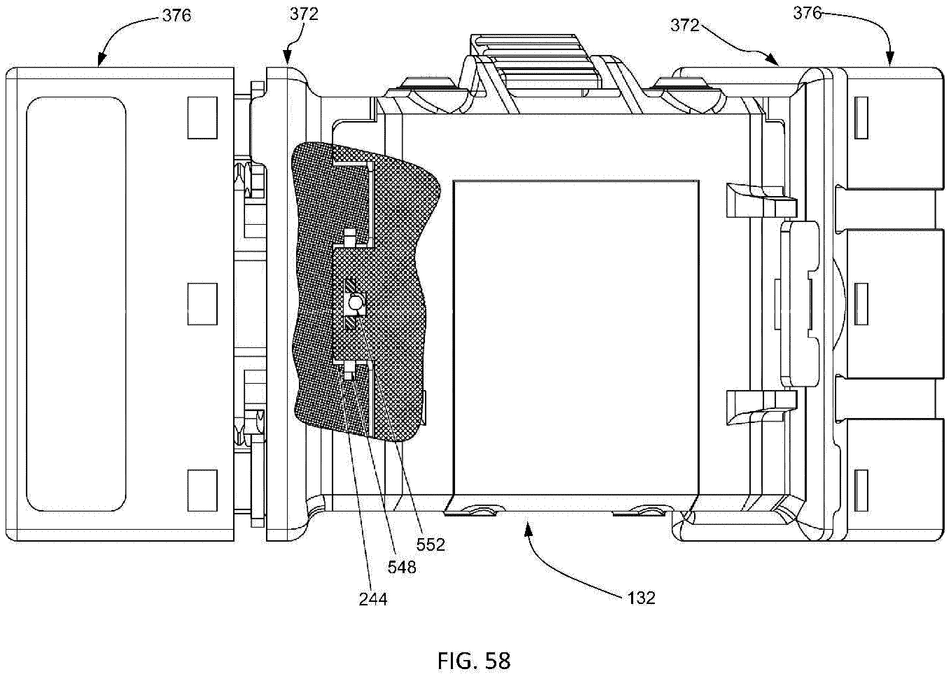

Referring now to FIGS. 53-58, there is shown an alternative embodiment battery pack center base module **132.** The embodiment appearing in FIGS. 53-58 is particularly advantageous in various situations where the battery packs could become dislodged or jarred free from the center base module, such as a skydiver or paratrooper hitting the ground hard, an impact or collision experienced by the helmet, and so forth. The center base module **132** includes left and right side surfaces **148** having sockets **248.** The battery pack center base module **132** has left and right STUB battery packs **376** attached to each of the left and right side surfaces **148** of the battery pack center base module **132** via STUB adapters **372.**

Each STUB adapter **372** has a first interface surface **380** configured to detachably engage with the side surfaces **148** on the battery pack center base module **132** and a second interface surface **384** opposite the first interface surface **380** configured to detachably engage with a standard STUB battery pack interface **388.**

The first interface surface **380** includes a pair of lugs **244** which releasably seat in correspondingly shaped receptacles or sockets **248** formed in the side surface **148** of the battery pack center base module **132.** It will be recognized that the lugs **244** may have other geometrical configurations. A base surface **252** of each receptacle **248** includes a magnetic fastener element **256** and electrical contacts **260.** An upper surface **264** of each lug **244** includes a magnetic fastener element **268** is aligned with the magnetic fastener element **256** and electrical contacts **272** which are aligned with respective ones of the electrical contacts **260.**

The second interface surface **384** includes a bayonet type mount **432** including a center post **436** and opposing ears **440.** The ears **440** extend from the post **436** to define a retention groove **444** between each of the ears **440** and the surface **384.** A center terminal **448** on the bayonet mount assembly **432** is aligned with the center terminal **392** (see FIG. 29A) which includes terminals that are electrically coupled to terminals (not shown) as described above on the first interface surface **380** to electrically couple the battery pack **376** to the battery pack center base module **132.**

In operation, to attach the battery pack **376** to the adapter second interface surface **384,** the battery pack **376** is positioned so that the center terminals **392** and **448** are aligned and the twist retention elements **428** on the STUB battery pack **376** are angularly offset with respect to the bayonet ears **440** on the adapter second interface **384.** The STUB battery pack **376** is then rotated to cause the twist retention elements **428** to engage the retention grooves **444.** To remove the battery pack **376** from the adapter second interface surface **384,** the process is reversed. In this manner the battery **376** can be attached and removed from the adapter **372** while leaving the adapter in place on the battery pack center base module **132.**

In embodiments, the magnetic fastener elements **256** and **268** are each permanent magnets wherein the aligned faces are of opposite polarity to provide a physical connection between the battery pack center base module **132** and the battery pack **176** when the lugs **244** are inserted into the sockets **248.** In alternative embodiments, for each of the magnetic fastener element pairs **256, 268,** one is a permanent magnet and the other is formed of a magnetically attractable material such as a ferromagnetic metal to provide a physical connection between the battery pack center base module **132** and the battery pack **176.**

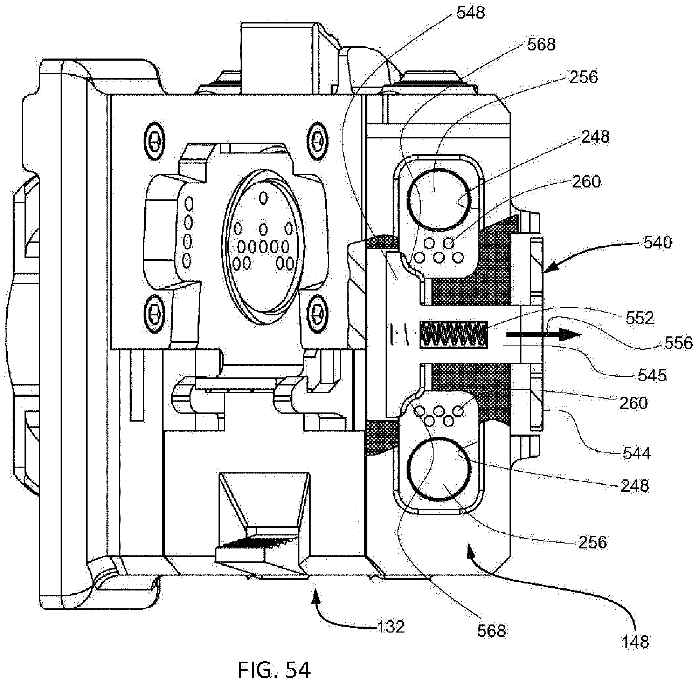

A locking bar assembly **540** includes a lock bar **545** received within the housing of the battery pack center base module **132.** A first end of the lock bar **545** protrudes from the rearward surface of the housing of the battery pack center base module housing **132** and has a manually depressible tab **544.** A second end of the lock bar **545** opposite the first end has a latching plate **548.** The lock bar **545** is slidable within the housing in the fore and aft direction. A captured spring or like resilient member **552** has a first end bearing against an interior surface within the housing of the battery pack center base module **132.** A second end of the captured spring or like resilient member **552** bears against lock bar **545** and urges the lock bar **545** into the locked position, i.e., in a rearward direction in relation to the battery pack center base module **132** as indicated by the arrow **556** in FIG. 54.

When the lock bar **545** is in the locked position, the latch plate **548** engages aligned grooves **560** in the lugs **244** and is retained therein by the spring force of the spring **552.** When it is desired to detach the battery pack **376** and adapter module **372** from the battery pack center base module **132,** the user manually depresses the lock bar tab **544** against the urging of the spring **552** until the latch plate **548** moved out of the grooves **560** and then exerts a pulling force on the battery pack **376** which is greater than the magnetic force of attraction between the fastener elements **256, 268.** To attach the battery pack **376** and adapter module **372** from the battery pack center base module **132,** the user aligns the lugs **244** with the sockets **248** and presses the lugs **244** into the sockets **248.** The magnetic force of attraction aids the user in aligning the lugs **244** with the sockets **248,** e.g., when the user is attaching the battery pack **376** and adapter module **372** while wearing the helmet.

When the adapter module **372** is being attached to battery pack center base module **132,** ramped or beveled surfaces **564** on the lugs **244** slide past complementary ramped or beveled surfaces **568** on the latch plate **548.** This provides a wedging action which causes the latch plate **548** to move out of the socket **248** against the urging of the spring **552** until the latch plate **548** is in axial alignment with the grooves **560** wherein the spring **552** causes the latch plate **548** to engage the grooves **560.** In embodiments, a protrusion **572** on the adapter **372** aligns with a complementary notch **576** formed on the battery pack center base module **132** to provide a keyed configuration to ensure that an attached battery is in the proper orientation.

In operation, when the battery **376** is placed in proximity of the battery pack interface **372,** the magnets **268** located in the battery pack adapter **372** and the magnets **256** in the sockets **248** of the battery interface **148** of the center module **132** attract each other, causing the battery **367** to home into its locking position. The battery locking plate **548** has a chamfered edge **568** on one side so that the force of the magnetic pull homing the battery creates a wedging action that moves the locking bar **544** out of the way overcoming the force of the battery locking bar spring **552.** When the battery pack adapter is fully engaged into its locking position, the channel **560** geometry allows the locking plate **568** to slide back into the original locked position at the urging of the spring **552,** creating a catch. To remove the battery, the user manually presses the tab portion **544** toward the center module housing while pulling on the battery **376** to overcome the attractive force of the magnets **256, 268.**

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims.

## Claims

1. A battery pack adapter (372), comprising:
a first side (380) configured for coupling to a helmet accessory control unit; and
a second side (384) opposite the first side (380) configured for detachably coupling to a battery pack (376);
said first side (380) comprising first and second protruding attachment lugs (244) configured to be detachably received within first and second complementary receptacles (248), respectively, on the helmet accessory control unit; the battery pack adapter being **characterized by**:
each of the first and second protruding attachment lugs (244) comprising a magnetic fastener element (268) configured to magnetically engage with an aligned magnetic fastener element (256) in a respective one of the complementary receptacles (248); and
each of the first and second protruding attachment lugs (244) comprising electrical connector elements (272) configured to establish an electrical connection with aligned electrical contacts (260) in a respective one of the complementary receptacles (248).

2. The battery pack adapter of claim 1, wherein each of the first and second protruding attachment lugs comprise a slot (560) configured to removably receive a locking plate (548) when the battery pack adapter (372) is attached to the helmet accessory control unit.

3. The battery pack adapter of any of the preceding claims, wherein the second side is configured for detachable coupling to a battery pack (372) which conforms to a Small Tactical Universal Battery (STUB) standard for battery pack interfaces.

4. A battery pack system for a helmet mount assembly, the battery pack system comprising at least one battery pack adapter (372) of any of the preceding claims and the helmet accessory control unit (132).

5. The battery pack system of claim 4, wherein the helmet accessory control unit is a center base module (132) configured for electrical and physical attachment to a helmet mount assembly (104), the battery pack system further comprising:
a first battery pack (376); and
the at least one battery pack adapter (372) including a first battery pack adapter (372) configured to be detachably coupled to a first side (148) of the center base module (132) wherein the first and second protruding lugs (244) are configured for removable attachment to aligned and facing first and second sockets (248) on the first side (148) of the center base module (132).

6. The battery pack system of claim 5, further comprising:
a first lock bar (545) on the center base module (132) and movable between a locking position and an unlocking position, the first lock bar (545) including a first latching plate (548) engaging complementary grooves (560) in the first and second protruding lugs (244) on the first battery pack (376) when the first adapter (372) is attached to the center base module (132).

7. The battery pack system of claim 5 or claim 6, further comprising:
a second battery pack (376); and
the at least one battery pack adapter (372) including a second battery pack adapter (372) configured to be detachably coupled to a second side (148) of the center base module (132) wherein the first and second protruding lugs (244) are configured for removable attachment to aligned and facing first and second sockets (248) on the second side (148) of the center base module (132).

8. The battery pack system of claim 7, further comprising:
a second lock bar (545) on the center base module (132) and movable between a locking position and an unlocking position, the second lock bar (545) including a second latching plate (548) engaging complementary grooves (560) in the first and second protruding lugs (244) on the second battery pack (376) when the second adapter (372) is attached to the center base module (132).

9. A battery pack system for a helmet mount assembly, comprising:
a center base module (132) configured for electrical and physical attachment to a helmet mount assembly;
first and second battery packs (176, 176a, 176b, 176c) for removable attachment to the center base module (132);
each of the first and second battery packs (176, 176a, 176b, 176c) having a pair of protruding attachment lugs (244), each of the attachment lugs (244) having first magnetic fastener element (268) and a first electrical connector element (272);
the center base module (132) having a first side surface (148) configured for detachably securing the first battery pack (176, 176a, 176b, 176c);
the center base module (132) having a second side surface (148) opposite the first side surface (148) configured for detachably securing the second battery pack (176, 176a, 176b, 176c); the battery pack system being **characterized by**:
each of the first and second side surfaces (148) comprising a pair of lug receptacles (248) for receiving a respective one of the pairs of protruding attachment lugs (244);
each lug receptacle (244) having a second magnetic fastener element (256) for physically coupling to a respective one of the first magnetic fastener elements (268); and
each lug receptacle (244) having a second electrical connector element (260) for electrically coupling to a respective one of the first electrical connector elements (272).

10. The battery pack system of claim 9, further comprising an adapter (180) interchangeably attachable to the helmet mount assembly in place of the center base module (132) and configured to releasably attach a third battery pack.

11. The battery pack system of claim 9 or claim 10, wherein the center base module comprises a modular processing system (296) removably received within a main body (136) of the center base module (132).

12. The battery pack system of any one of claims 9 to 11, wherein the center base module (132) comprises a switch (172) configured to selectively couple a selected one of the first and second battery packs (176, 176a, 176b, 176c), wherein each of the first and second battery packs (176, 176a, 176b, 176c) is replaceable independently of the other.

13. The battery pack system of any one of claims 9 to 12, further comprising:
first and second adapters (372);
the first adapter (372) having a first interface surface (384) configured for removable attachment to the first side surface (148) of the center base module (132) and a second interface surface (380) configured for removable attachment to the first battery pack (176, 176a, 176b, 176c); and
the second adapter (372) having a third interface surface (384) configured for removable attachment to the second side surface (148) of the center base module (132) and a fourth interface surface (380) configured for removable attachment to the second battery pack (176, 176a, 176b, 176c).

14. The battery pack system of claim 13, wherein the first and second battery packs (176, 176a, 176b, 176c) are STUB battery packs.

15. A battery pack system for a helmet mount assembly, comprising:
a center base module (132) configured for electrical and physical attachment to a helmet mount assembly;
first and second battery packs (376) for removable attachment to the center base module (132); the battery pack system being **characterized by**:
a first adapter (452) hingedly attached to a first side of the center base module and having a first interface surface (472) configured for removable attachment to the first battery pack (376); and
a second adapter (452) hingedly attached to a second side of the center base module and having a second interface surface (472) configured for removable attachment to the second battery pack (376).

16. The battery pack system of claim 15, wherein the first and second adapters (452) are pivotable between a deployed position wherein the first and second battery packs (376) are pivoted toward the helmet and a non-deployed position wherein the first and second battery packs (376) are pivoted away the helmet to facilitate attachment and removal of the first and second battery packs (376).

17. The battery pack system of claim 15 or claim 16, wherein the first and second battery packs (376) are STUB battery packs.

## Patentansprüche

1. Akkupackadapter (372), umfassend:
eine erste Seite (380), die zum Koppeln mit einer Helmzubehör-Steuereinheit ausgelegt ist; und
eine zweite Seite (384) gegenüber der ersten Seite (380), die zum lösbaren Koppeln mit einem Akkupack (376) ausgelegt ist;
wobei die erste Seite (380) erste und zweite vorstehende Befestigungsnasen (244) umfasst, die ausgelegt sind, um lösbar in ersten und zweiten komplementären Aufnahmen (248) jeweils an der Helmzubehör-Steuereinheit aufgenommen zu werden; wobei der Akkupackadapter **gekennzeichnet ist durch**:
wobei jede der ersten und zweiten vorstehenden Befestigungsnasen (244) ein magnetisches Befestigungselement (268) umfasst, das ausgelegt ist, um magnetisch mit einem ausgerichteten magnetischen Befestigungselement (256) in einer jeweiligen der komplementären Aufnahmen (248) in Eingriff zu treten; und
wobei jede der ersten und zweiten vorstehenden Befestigungsnasen (244) elektrische Verbindungselemente (272) umfasst, die ausgelegt sind, um eine elektrische Verbindung mit ausgerichteten elektrischen Kontakten (260) in einer jeweiligen der komplementären Aufnahmen (248) herzustellen.

2. Akkupackadapter nach Anspruch 1, wobei jede der ersten und zweiten vorstehenden Befestigungsnasen einen Schlitz (560) umfasst, der ausgelegt ist, um eine Verriegelungsplatte (548) lösbar aufzunehmen, wenn der Akkupackadapter (372) an der Helmzubehör-Steuereinheit befestigt ist.

3. Akkupackadapter nach einem der vorhergehenden Ansprüche, wobei die zweite Seite zum lösbaren Koppeln mit einem Akkupack (372) ausgelegt ist, der einem Small Tactical Universal Battery (STUB)-Standard für Akkupack-Schnittstellen entspricht.

4. Akkupacksystem für eine Helmbefestigungsanordnung, wobei das Akkupacksystem mindestens einen Akkupackadapter (372) nach einem der vorhergehenden Ansprüche und die Helmzubehör-Steuereinheit (132) umfasst.

5. Akkupacksystem nach Anspruch 4, wobei die Helmzubehör-Steuereinheit ein Zentralbasismodul (132) ist, das für eine elektrische und physische Befestigung an einer Helmbefestigungsanordnung (104) ausgelegt ist, wobei das Akkupacksystem ferner umfasst:
einen ersten Akkupack (376); und
wobei der mindestens eine Akkupackadapter (372) einen ersten Akkupackadapter (372) beinhaltet, der ausgelegt ist, um lösbar mit einer ersten Seite (148) des Zentralbasismoduls (132) gekoppelt zu werden, wobei die ersten und zweiten vorstehenden Nasen (244) für eine lösbare Befestigung an ausgerichteten und zugewandten ersten und zweiten Buchsen (248) an der ersten Seite (148) des Zentralbasismoduls (132) ausgelegt sind.

6. Akkupacksystem nach Anspruch 5, ferner umfassend:
eine erste Verriegelungsleiste (545) an dem Zentralbasismodul (132) und bewegbar zwischen einer Verriegelungsposition und einer Entriegelungsposition, wobei die erste Verriegelungsleiste (545) eine erste Rastplatte (548) beinhaltet, die komplementäre Nuten (560) in den ersten und zweiten vorstehenden Nasen (244) an dem ersten Akkupack (376) in Eingriff nimmt, wenn der erste Adapter (372) an dem Zentralbasismodul (132) befestigt ist.

7. Akkupacksystem nach Anspruch 5 oder Anspruch 6, ferner umfassend:
einen zweiten Akkupack (376); und
wobei der mindestens eine Akkupackadapter (372) einen zweiten Akkupackadapter (372) beinhaltet, der ausgelegt ist, um lösbar mit einer zweiten Seite (148) des Zentralbasismoduls (132) gekoppelt zu werden, wobei die ersten und zweiten vorstehenden Nasen (244) für eine lösbare Befestigung an ausgerichteten und zugewandten ersten und zweiten Buchsen (248) an der zweiten Seite (148) des Zentralbasismoduls (132) ausgelegt sind.

8. Akkupacksystem nach Anspruch 7, ferner umfassend:
eine zweite Verriegelungsleiste (545) an dem Zentralbasismodul (132) und bewegbar zwischen einer Verriegelungsposition und einer Entriegelungsposition, wobei die zweite Verriegelungsleiste (545) eine zweite Rastplatte (548) beinhaltet, die komplementäre Nuten (560) in den ersten und zweiten vorstehenden Nasen (244) an dem zweiten Akkupack (376) in Eingriff nimmt, wenn der zweite Adapter (372) an dem Zentralbasismodul (132) befestigt ist.

9. Akkupacksystem für eine Helmbefestigungsanordnung, umfassend:
ein Zentralbasismodul (132), das für eine elektrische und physische Befestigung an einer Helmbefestigungsanordnung ausgelegt ist;
erste und zweite Akkupacks (176, 176a, 176b, 176c) zur lösbaren Befestigung an dem Zentralbasismodul (132);
wobei jeder der ersten und zweiten Akkupacks (176, 176a, 176b, 176c) ein Paar vorstehender Befestigungsnasen (244) aufweist, wobei jede der Befestigungsnasen (244) ein erstes magnetisches Befestigungselement (268) und ein erstes elektrisches Verbindungselement (272) aufweist;
wobei das Zentralbasismodul (132) eine erste Seitenfläche (148) aufweist, die zum lösbaren Sichern des ersten Akkupacks (176, 176a, 176b, 176c) ausgelegt ist;
wobei das Zentralbasismodul (132) eine zweite Seitenfläche (148) gegenüber der ersten Seitenfläche (148) aufweist, die zum lösbaren Sichern des zweiten Akkupacks (176, 176a, 176b, 176c) ausgelegt ist; wobei das Akkupacksystem **gekennzeichnet ist durch**:
wobei jede der ersten und zweiten Seitenflächen (148) ein Paar Nasenaufnahmen (248) zum Aufnehmen einer jeweiligen der Paare vorstehender Befestigungsnasen (244) umfasst;
wobei jede Nasenaufnahme (244) ein zweites magnetisches Befestigungselement (256) zum physischen Koppeln mit einem jeweiligen der ersten magnetischen Befestigungselemente (268) aufweist; und
wobei jede Nasenaufnahme (244) ein zweites elektrisches Verbindungselement (260) zum elektrischen Koppeln mit einem jeweiligen der ersten elektrischen Verbindungselemente (272) aufweist.

10. Akkupacksystem nach Anspruch 9, ferner umfassend einen Adapter (180), der austauschbar an der Helmbefestigungsanordnung anstelle des Zentralbasismoduls (132) befestigbar ist und ausgelegt ist, um einen dritten Akkupack lösbar zu befestigen.

11. Akkupacksystem nach Anspruch 9 oder Anspruch 10, wobei das Zentralbasismodul ein modulares Verarbeitungssystem (296) umfasst, das lösbar in einem Hauptkörper (136) des Zentralbasismoduls (132) aufgenommen ist.

12. Akkupacksystem nach einem der Ansprüche 9 bis 11, wobei das Zentralbasismodul (132) einen Schalter (172) umfasst, der ausgelegt ist, um selektiv einen ausgewählten der ersten und zweiten Akkupacks (176, 176a, 176b, 176c) zu koppeln, wobei jeder der ersten und zweiten Akkupacks (176, 176a, 176b, 176c) unabhängig von dem anderen austauschbar ist.

13. Akkupacksystem nach einem der Ansprüche 9 bis 12, ferner umfassend:
erste und zweite Adapter (372);
wobei der erste Adapter (372) eine erste Schnittstellenfläche (384) aufweist, die für eine lösbare Befestigung an der ersten Seitenfläche (148) des Zentralbasismoduls (132) ausgelegt ist, und eine zweite Schnittstellenfläche (380), die für eine lösbare Befestigung an dem ersten Akkupack (176, 176a, 176b, 176c) ausgelegt ist; und
wobei der zweite Adapter (372) eine dritte Schnittstellenfläche (384) aufweist, die für eine lösbare Befestigung an der zweiten Seitenfläche (148) des Zentralbasismoduls (132) ausgelegt ist, und eine vierte Schnittstellenfläche (380), die für eine lösbare Befestigung an dem zweiten Akkupack (176, 176a, 176b, 176c) ausgelegt ist.

14. Akkupacksystem nach Anspruch 13, wobei die ersten und zweiten Akkupacks (176, 176a, 176b, 176c) STUB-Akkupacks sind.

15. Akkupacksystem für eine Helmbefestigungsanordnung, umfassend:
ein Zentralbasismodul (132), das für eine elektrische und physische Befestigung an einer Helmbefestigungsanordnung ausgelegt ist;
erste und zweite Akkupacks (376) zur lösbaren Befestigung an dem Zentralbasismodul (132); wobei das Akkupacksystem **gekennzeichnet ist durch**:
einen ersten Adapter (452), der gelenkig an einer ersten Seite des Zentralbasismoduls befestigt ist und eine erste Schnittstellenfläche (472) aufweist, die für eine lösbare Befestigung an dem ersten Akkupack (376) ausgelegt ist; und
einen zweiten Adapter (452), der gelenkig an einer zweiten Seite des Zentralbasismoduls befestigt ist und eine zweite Schnittstellenfläche (472) aufweist, die für eine lösbare Befestigung an dem zweiten Akkupack (376) ausgelegt ist.

16. Akkupacksystem nach Anspruch 15, wobei die ersten und zweiten Adapter (452) zwischen einer Einsatzposition, wobei die ersten und zweiten Akkupacks (376) zum Helm hin geschwenkt sind, und einer Ruheposition, wobei die ersten und zweiten Akkupacks (376) vom Helm weg geschwenkt sind, um die Befestigung und Entfernung der ersten und zweiten Akkupacks (376) zu erleichtern, schwenkbar sind.

17. Akkupacksystem nach Anspruch 15 oder Anspruch 16, wobei die ersten und zweiten Akkupacks (376) STUB-Akkupacks sind.

## Revendications

1. Adaptateur (372) de bloc-batterie, comprenant :
un premier côté (380) configuré pour se coupler à une unité de commande d'accessoire de casque ; et
un second côté (384) opposé au premier côté (380) configuré pour se coupler de manière amovible à un bloc-batterie (376) ;
ledit premier côté (380) comprenant des première et seconde pattes (244) de fixation saillantes configurées pour être reçues de manière amovible dans des premier et second logements (248) complémentaires, respectivement, sur l'unité de commande d'accessoire de casque ; l'adaptateur de bloc-batterie étant **caractérisé par** :
chacune des première et seconde pattes (244) de fixation saillantes comprenant un élément de fixation magnétique (268) configuré pour venir magnétiquement en prise avec un élément de fixation magnétique (256) aligné dans l'un logement respectif des logements (248) complémentaires ; et
chacune des première et seconde pattes (244) de fixation saillantes comprenant des éléments de connecteur électrique (272) configurés pour établir une connexion électrique avec des contacts électriques (260) alignés dans l'un logement respectif des logements (248) complémentaires.

2. Adaptateur de bloc-batterie selon la revendication 1, dans lequel chacune des première et seconde pattes de fixation saillantes comprend une fente (560) configurée pour recevoir de manière amovible une plaque de verrouillage (548) lorsque l'adaptateur (372) de bloc-batterie est fixé à l'unité de commande d'accessoire de casque.

3. Adaptateur de bloc-batterie selon l'une quelconque des revendications précédentes, dans lequel le second côté est configuré pour un couplage amovible à un bloc-batterie (372) qui est conforme à une norme relative à la petite batterie tactique universelle (STUB) pour des interfaces de bloc-batterie.

4. Système de bloc-batterie pour un ensemble de montage de casque, le système de bloc-batterie comprenant au moins un adaptateur (372) de bloc-batterie selon l'une quelconque des revendications précédentes et l'unité de commande d'accessoire de casque (132).

5. Système de bloc-batterie selon la revendication 4, dans lequel l'unité de commande d'accessoire de casque est un module de base central (132) configuré pour la fixation électrique et physique à un ensemble de montage de casque (104), le système de bloc-batterie comprenant en outre :
un premier bloc-batterie (376) ; et
au moins un adaptateur (372) de bloc-batterie comportant un premier adaptateur (372) de bloc-batterie configuré pour être couplé de manière amovible à un premier côté (148) du module de base central (132) dans lequel les première et seconde pattes saillantes (244) sont configurées pour la fixation amovible à des première et seconde prises (248) alignées et en regard sur le premier côté (148) du module de base central (132).

6. Système de bloc-batterie selon la revendication 5, comprenant en outre :
une première barre de verrouillage (545) située sur le module de base central (132) et pouvant se déplacer entre une position de verrouillage et une position de déverrouillage, la première barre de verrouillage (545) comportant une première plaque de blocage (548) venant en prise avec des rainures complémentaires (560) dans les première et seconde pattes saillantes (244) sur le premier bloc-batterie (376) lorsque le premier adaptateur (372) est fixé au module de base central (132).

7. Système de bloc-batterie selon la revendication 5 ou la revendication 6, comprenant en outre :
un deuxième bloc-batterie (376) ; et
au moins un adaptateur (372) de bloc-batterie comportant un second adaptateur (372) de bloc-batterie configuré pour être couplé de manière amovible à un second côté (148) du module de base central (132) dans lequel les première et seconde pattes saillantes (244) sont configurées pour la fixation amovible à des première et seconde prises (248) alignées et en regard sur le second côté (148) du module de base central (132).

8. Système de bloc-batterie selon la revendication 7, comprenant en outre :
une seconde barre de verrouillage (545) située sur le module de base central (132) et pouvant se déplacer entre une position de verrouillage et une position de déverrouillage, la seconde barre de verrouillage (545) comportant une seconde plaque de blocage (548) venant en prise avec des rainures complémentaires (560) dans les première et seconde pattes saillantes (244) sur le deuxième bloc-batterie (376) lorsque le second adaptateur (372) est fixé au module de base central (132).

9. Système de bloc-batterie pour un ensemble de montage de casque, comprenant :
un module de base central (132) configuré pour la fixation électrique et physique à un ensemble de montage de casque ;
des premier et deuxième blocs-batteries (176, 176a, 176b, 176c) pour la fixation amovible au module de base central (132) ;
chacun des premier et deuxième blocs-batteries (176, 176a, 176b, 176c) présentant une paire de pattes (244) de fixation saillantes, chacune des pattes (244) de fixation présentant un premier élément de fixation magnétique (268) et un premier élément de connecteur électrique (272) ;
le module de base central (132) présentant une première surface latérale (148) configurée pour fixer de manière amovible le premier bloc-batterie (176, 176a, 176b, 176c) ;
le module de base central (132) présentant une seconde surface latérale (148) opposée à la première surface latérale (148) configurée pour fixer de manière amovible le deuxième bloc-batterie (176, 176a, 176b, 176c) ; le système de bloc-batterie étant **caractérisé par** :
chacune des première et seconde surfaces latérales (148) comprenant une paire de logements (248) de patte destinés à recevoir l'une patte respective de la paire de pattes (244) de fixation saillantes ;
chaque logement de patte (244) présentant un second élément de fixation magnétique (256) destiné à se coupler physiquement à l'un élément de fixation magnétique respectif des premiers éléments de fixation magnétique (268) ; et
chaque logement de patte (244) présentant un second élément de connecteur électrique (260) pour se coupler électriquement à l'un élément de connecteur électrique respectif des premiers éléments de connecteur électrique (272).

10. Système de bloc-batterie selon la revendication 9, comprenant en outre un adaptateur (180) pouvant être fixé de manière interchangeable à l'ensemble de montage de casque à la place du module de base central (132) et configuré pour fixer de manière amovible un troisième bloc-batterie.

11. Système de bloc-batterie selon la revendication 9 ou la revendication 10, dans lequel le module de base central comprend un système de traitement modulaire (296) reçu de manière amovible à l'intérieur d'un corps principal (136) du module de base central (132).

12. Système de bloc-batterie selon l'une quelconque des revendications 9 à 11, dans lequel le module de base central (132) comprend un commutateur (172) configuré pour coupler sélectivement l'un bloc de batterie sélectionné des premier et deuxième blocs-batteries (176, 176a, 176b, 176c), dans lequel chacun des premier et deuxième blocs-batteries (176, 176a, 176b, 176c) est remplaçable indépendamment de l'autre.

13. Système de bloc-batterie selon l'une quelconque des revendications 9 à 12, comprenant en outre :
des premier et second adaptateurs (372) ;
le premier adaptateur (372) présentant une première surface d'interface (384) configurée pour la fixation amovible à la première surface latérale (148) du module de base central (132) et une deuxième surface d'interface (380) configurée pour la fixation amovible au premier bloc-batterie (176, 176a, 176b, 176c) ; et
le second adaptateur (372) présentant une troisième surface d'interface (384) configurée pour la fixation amovible à la seconde surface latérale (148) du module de base central (132) et une quatrième surface d'interface (380) configurée pour la fixation amovible au deuxième bloc-batterie (176, 176a, 176b, 176c).

14. Système de bloc-batterie selon la revendication 13, dans lequel les premier et deuxième blocs-batteries (176, 176a, 176b, 176c) sont des blocs-batteries STUB.

15. Système de bloc-batterie pour un ensemble de montage de casque, comprenant :
un module de base central (132) configuré pour la fixation électrique et physique à un ensemble de montage de casque ;
des premier et deuxième blocs-batteries (376) pour la fixation amovible au module de base central (132) ; le système de bloc-batterie étant **caractérisé par** :
un premier adaptateur (452) fixé de manière articulée à un premier côté du module de base central et présentant une première surface d'interface (472) configurée pour la fixation amovible au premier bloc-batterie (376) ; et
un second adaptateur (452) fixé de manière articulée à un second côté du module de base central et présentant une deuxième surface d'interface (472) configurée pour être fixée de manière amovible au deuxième bloc-batterie (376).

16. Système de bloc-batterie selon la revendication 15, dans lequel les premier et second adaptateurs (452) peuvent pivoter entre une position déployée dans laquelle les premier et deuxième blocs-batteries (376) sont pivotés vers le casque et une position non déployée dans laquelle les premier et deuxième blocs-batteries (376) sont pivotés à l'opposé du casque pour faciliter la fixation et le retrait des premier et deuxième blocs-batteries (376).

17. Système de bloc-batterie selon la revendication 15 ou la revendication 16, dans lequel les premier et deuxième blocs-batteries (376) sont des blocs-batteries STUB.
